(19) Europäisches Patentamt
European Patent Office
Office européen des brevets

(11) **EP 2 664 220 B1**

(12) # EUROPÄISCHE PATENTSCHRIFT

(45) Veröffentlichungstag und Bekanntmachung des Hinweises auf die Patenterteilung:
**12.05.2021 Patentblatt 2021/19**

(21) Anmeldenummer: **11808594.3**

(22) Anmeldetag: **21.12.2011**

(51) Int Cl.:
*H01S 3/00* (2006.01)  *H01S 3/08* (2006.01)
*H01S 3/081* (2006.01)  *G02F 1/35* (2006.01)

(86) Internationale Anmeldenummer:
**PCT/EP2011/006493**

(87) Internationale Veröffentlichungsnummer:
**WO 2012/095150 (19.07.2012 Gazette 2012/29)**

(54) **OPTISCHER RESONATOR MIT DIREKTEM GEOMETRISCHEM ZUGANG AUF DER OPTISCHEN ACHSE**

OPTICAL RESONATOR WITH DIRECT GEOMETRIC ACCESS TO THE OPTICAL AXIS

RÉSONATEUR OPTIQUE PRÉSENTANT UN ACCÈS GÉOMÉTRIQUE DIRECT À L'AXE OPTIQUE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **10.01.2011 DE 102011008225**

(43) Veröffentlichungstag der Anmeldung:
**20.11.2013 Patentblatt 2013/47**

(73) Patentinhaber:
• **Fraunhofer-Gesellschaft zur Förderung der angewandten Forschung e.V.**
**80686 München (DE)**
• **Max-Planck-Gesellschaft zur Förderung der Wissenschaften e.V.**
**80539 München (DE)**
• **RWTH Aachen**
**52062 Aachen (DE)**

(72) Erfinder:
• **RUSSBÜLDT, Peter**
**52072 Aachen (DE)**
• **WEITENBERG, Johannes**
**52070 Aachen (DE)**
• **PUPEZA, Joachim**
**80803 München (DE)**
• **UDEM, Thomas**
**80331 München (DE)**

(74) Vertreter: **Gagel, Roland**
**Patentanwalt Dr. Roland Gagel**
**Landsberger Strasse 480a**
**81241 München (DE)**

(56) Entgegenhaltungen:
• **GORDEYEV DV ET AL.: "The possibility of using a cavity with a pierced mirror in Argon ion lasers", RADIO ENGINEERING AND ELECTRONIC PHYSICS, Bd. 14, Nr. 9, 1. April 1969 (1969-04-01), Seiten 1420-1422, XP1691201,**
• **HUANG Y C ET AL: "Maximization of FEL gain for a hole-coupled resonator", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, Bd. 358, Nr. 1-3, 11. April 1995 (1995-04-11), Seiten 315-318, XP004174589, ISSN: 0168-9002, DOI: 10.1016/0168-9002(94)01512-0**
• **MING XIE: "Hole-coupled resonators for broadly tunable infrared free electron lasers", PROCEEDINGS OF SPIE, Bd. 1868, 1. Januar 1993 (1993-01-01), Seiten 150-162, XP55021927, ISSN: 0277-786X, DOI: 10.1117/12.150607**
• **KEVIN D. MOLL ET AL: "Output coupling methods for cavity-based high-harmonic generation", OPTICS EXPRESS, Bd. 14, Nr. 18, 1. Januar 2006 (2006-01-01), Seiten 8189-8197, XP55021815, ISSN: 1094-4087, DOI: 10.1364/OE.14.008189 in der Anmeldung erwähnt**

Bemerkungen:
Die Akte enthält technische Angaben, die nach dem Eingang der Anmeldung eingereicht wurden und die nicht in dieser Patentschrift enthalten sind.

**Beschreibung**

*Technisches Anwendungsgebiet*

Die vorliegende Erfindung betrifft einen optischen Resonator aus mehreren Spiegeln, der mindestens ein Hindernis im Strahlengang in Form einer Durchgangsöffnung in einem der Spiegel oder eines Ein- oder Auskoppelelements aufweist.

Derartige optische Resonatoren lassen sich beispielsweise als Überhöhungsresonatoren zur Erzeugung hoher Harmonischer einsetzen, die über die Durchgangsöffnung oder das Auskoppelelement aus dem Resonator ausgekoppelt werden. Der direkte geometrische Zugang zur optischen Achse ermöglicht den Einsatz eines derartigen Resonators auch für andere Anwendungen, bspw. die Thomson-Rückstreuung an Elektronen zur Erzeugung kohärenter Röntgenstrahlung, Pump-Probe-Experimente oder die Detektion von Vakuumpolarisation.

Passive optische Resonatoren dienen vielfältigen Zwecken. Der durch die Resonatorverluste bestimmte vielfache Umlauf der Strahlung führt zu einer erhöhten Sensitivität gegenüber Störungen, die für Messanwendungen genutzt werden kann, und einer erhöhten Intensität, deren erhöhte Wechselwirkung etwa für nichtlineare Prozesse wie Frequenzvervielfachung oder Prozesse mit kleinen Querschnitten wie Thomson-Rückstreuung an Elektronen nutzbar ist. Für viele Anwendungen ist ein Zugang auf der Achse des Resonators notwendig, um Strahlung in den Resonator ein- oder auszukoppeln. Das ist in vielen Fällen etwa durch dichroitische Spiegel möglich, ohne dabei große Verluste für die zirkulierende Strahlung einzubringen. Für manche Anwendungen ist ein geometrischer Zugang auf der Achse des Resonators wünschenswert, beispielsweise wenn Licht mit Wellenlängen ein- oder ausgekoppelt werden sollen, für die keine dichroitischen Spiegel existieren. Ein solcher geometrischer Zugang auf der Achse stellt eine Blende für die zirkulierende Strahlung dar, beeinflusst somit die Feldverteilung und prägt im Allgemeinen Verluste auf, die die Überhöhung der resonatorinternen Leistung begrenzen. Durch ein geeignetes Resonatordesign können die Verluste für die zirkulierende Strahlung jedoch sehr klein gehalten und damit große Überhöhungen erreicht werden.

*Stand der Technik*

Im Folgenden wird auf die spezielle Problemstellung der Auskopplung von hohen Harmonischen aus einem fs-Überhöhungsresonator näher eingegangen. Der beschriebene geometrische Zugang auf der optischen Achse des Resonators kann aber selbstverständlich auch für viele weitere Aufgaben Anwendung finden.

Durch Fokussierung von fs-Pulsen mit ausreichender Intensität in ein Gas können hohe Harmonische der Fundamentalstrahlung mit Wellenlängen bis wenige nm erzeugt werden. Diese räumlich und zeitlich kohärente Strahlung ist beispielsweise interessant für die ultrapräzise Spektroskopie in diesem Wellenlängenbereich, zur Erzeugung und Untersuchung von Nanostrukturen oder in der Attosekundenphysik. Die Effizienz der Konversion ist mit $10^{-11}$-$10^{-6}$ sehr klein. Um bei größeren Repetitionsraten im MHz-Bereich, wie sie insbesondere für die Spektroskopie wichtig sind, die zur Konversion erforderliche Intensität zu erreichen, werden Überhöhungsresonatoren eingesetzt, in denen die Intensität um einige hundert oder mehr überhöht wird. Die erreichbare Leistungsüberhöhung $P$ hängt dabei von den Leistungs-

$$P = \frac{1 - R_{IC}}{\left(1 - \sqrt{R\,R_{IC}}\right)^2}$$

verlusten pro Resonatorumlauf $R$ gemäß                        ab, wobei $R_{IC}$ die Reflektivität des Einkoppelspiegels ist. Unter Leistungsüberhöhung oder kurz Überhöhung soll im Folgenden immer die zirkulierende Leistung bezogen auf die einfallende Leistung verstanden werden. Die Dispersion im Resonator muss für den gesamten Wellenlängenbereich der fs-Strahlung verschwinden, um das volle Spektrum einzukoppeln. Die im Fokus des Resonators erzeugten hohen Harmonischen müssen also ausgekoppelt werden, ohne dass dabei große Verluste für die Fundamentale entstehen oder Dispersion eingeführt wird. Für eine Skalierbarkeit hin zu größeren mittleren Leistungen und Pulsspitzenleistungen dürfen durch die Auskopplung keine Nichtlinearitäten oder thermischen Effekte eingeführt werden. Bestimmte Feldverteilungen der zirkulierenden Strahlung sind für die Erzeugung hoher Harmonischer vorteilhaft. Schließlich ist ein möglichst einfacher und stabiler Aufbau anzustreben.

Ein bekannter Lösungsansatz besteht in der Auskopplung der hohen Harmonischen durch ein Loch oder einen Schlitz im Spiegel hinter dem Fokus. Der kleinere Divergenzwinkel der hohen Harmonischen aufgrund der kleineren Wellenlänge macht diesen Ansatz möglich.

Für einen zirkulierenden Gaußschen Strahl muss ein Loch auf der optischen Achse im Spiegel sehr klein sein, um eine große Überhöhung zu ermöglichen. Das Loch mit Radius $a$ stellt für den Gaußschen Strahl mit Strahlradius $w_f$ ein Hindernis dar, an dem $T = \exp\left(-2a^2/w_f^2\right)$ der Leistung transmittiert werden. Der Überlapp des beschnittenen Felds mit dem ursprünglichen ist noch einmal $T$, so dass die Leistungsverluste pro Umlauf $1 - T^2$ und die maximal

erreichbare Überhöhung im Resonator $P = 1/(1 - T^2)$ sind. Um eine Überhöhung von $P = 100$ ($P = 1000$) zu ermöglichen, darf der Lochradius also nur $a = 0,05\,w_f$ ($a = 0,016\,w_f$) betragen. Um abzuschätzen, welcher Bruchteil der Leistung der hohen Harmonischen durch dieses Loch transmittiert wird, soll angenommen werden, dass die Harmonischen ($h$) wie die Fundamentale ($f$) als Gaußsche Strahlen beschrieben werden können, deren Fokusradien durch die Intensitätsabhängigkeit des Konversionsprozesses $I_h \sim I_f^{a_h}$ um den Faktor $\sqrt{a_h}$ kleiner sind. Der Quotient der Fernfelddivergenzwinkel $\vartheta$ und damit der Strahlradien $w$ am Ort des Spiegels mit Loch ist dann mit $\vartheta\,w_0 = \lambda/\pi$ gegeben durch

$$\frac{\vartheta_h}{\vartheta_f} = \frac{w_h}{w_f} = \frac{\lambda_h/\pi w_{0,h}}{\lambda_f/\pi w_{0,f}} = \frac{\sqrt{a_h}}{n},$$

wobei $n$ die Ordnung der Harmonischen bezeichnet. $a_h$ ist abhängig vom Gas und von der Ordnung der Harmonischen, z.B. $\sim 8$. Der Bruchteil der transmittierten Leistung ist

$$T_h = 1 - \exp\left(-2a^2/w_h^2\right).$$

Für einen gemessenen Wert $\vartheta_f/\vartheta_h = 6$ für $n = 9$ ist $T_h = 0,16$ ($T_h = 0,02$) für einen Lochradius, der $P = 100$ ($P = 1000$) ermöglicht. Für höhere Harmonische, die einen kleineren Divergenzwinkel haben, steigt die Effizienz der Auskopplung.

Um kleine Verluste zu erreichen sind bisher drei unterschiedliche Ansätze demonstriert. Der erste besteht darin, eine höhere transversale Mode mit einer Nullstelle des elektrischen Felds auf der Achse im Resonator anzuregen. Beim zweiten Ansatz wird ein abbildender Resonator aufgebaut, der das Loch in der Feldverteilung bei jedem Umlauf reproduziert. Der dritte Ansatz besteht darin, zwei Resonatoren aufzubauen, die im Fokus unter einem kleinen Winkel überlagert sind, und die hohen Harmonischen nichtkollinear zu erzeugen und durch einen schmalen Spalt zwischen den Fokussierspiegeln der beiden Resonatoren auszukoppeln.

Die erste Möglichkeit hat zwei entscheidende Nachteile. Auch hier sind die Verluste am Loch im Spiegel relativ groß. Die Transmission durch ein schlitzförmiges Hindernis auf der optischen Achse mit Breite $2a$ für einen Strahl der transversalen GaußHermite-Mode $GH_{1,0}$ mit dem Strahlradius $w$ ist

$$T = \mathrm{erfc}\left(\sqrt{2}\,\frac{a}{w}\right) + \sqrt{\frac{2}{\pi}}\,2\frac{a}{w}\exp\left(-2\frac{a^2}{w^2}\right).$$

Um eine Überhöhung von $P = 100$ ($P = 1000$) zu ermöglichen, darf die Breite $2a = 0,13 \cdot 2w$ ($2a = 0,06 \cdot 2w$) betragen. Die Feldverteilung mit einer einfachen Nullstelle des Felds auf der optischen Achse ist ungünstig für die Erzeugung hoher Harmonischer, da die gegenphasig schwingenden Lobes (Strahlungskeulen) des elektrischen Felds bei symmetrischem Aufbau des Gastargets bedeuten, dass auch die Intensität der so erzeugten hohen Harmonischen auf der Achse verschwindet. In K.D. Moll, R.J. Jones, J. Ye, "Output coupling methods for cavity-based high-harmonic generation," Opt. Expr. 14 (2006) ist ein Überhöhungsresonator beschrieben, in dem Phasenmasken auf den Fokussierspiegeln des Ringresonators die beiden Lobes der $GH_{10}$-Mode gleichphasig setzen, so dass im Fokus die Intensität auf der Achse maximal ist. Gauß-Laguerre-Moden mit azimuthaler Modenzahl $l > 0$ weisen ein Loch auf der Achse auf, für das die Feldstärke mit $r^l$ wächst und so größere Blendenradien bei kleineren Verlusten zulässt. Diese Abhängigkeit gilt für den Fall, dass die Intensität oder dass die Phase gemäß der azimuthalen Ordnung um die optische Achse oszilliert. In beiden Fällen ist allerdings die resultierende Feldverteilung der hohen Harmonischen ungünstig.

Ein abbildender Resonator kann im einfachsten Fall durch einen linearen symmetrisch-konfokalen Resonator realisiert werden, für den die Länge gleich dem Krümmungsradius der Spiegel ist. Unter einem abbildenden Resonator ist hierbei ein telezentrisch abbildender Resonator mit Vergrößerung $\pm 1$ zu verstehen, für den die Strahltransfermatrix die positive oder negative Einheitsmatrix ist. Ein solcher Resonator kann auch als Ringresonator ausgeführt werden, wie er für die Erzeugung hoher Harmonischer eingesetzt wird. Dazu können zwei unterschiedliche aber gleich lange Resonatorarme benutzt werden, oder es wird eine Feldverteilung angeregt, die in der Hinrichtung einen kollimierten Ring um die Achse darstellt und bei der Rückrichtung einen kleinen Fokus mit Maximum auf der Achse formt. W.P. Putnam, G. Abram, E.L. Falcao-Filho, J.R. Birge, F.X. Kärtner, "High-intensity Bessel-Gauss beam enhancement cavities," CLEO conference paper (2010) beschreiben einen solchen Resonator für den cw-Fall. Für die Übertragung des Schemas auf fs-Strahlung stellt sich das Problem, dass für die konfokale Anordnung die Resonatorlänge durch den Krümmungsradius der Spiegel vorgegeben ist. Die Repetitionsrate der eingekoppelten fs-Strahlung muss dann einstellbar sein. Für Repetitionsraten, die größere Resonatorlängen erfordern, wird der Strahlradius auf den gekrümmten Spiegeln bei einer gegebenen Fokusgröße unpraktikabel groß und damit störempfindlich. Aberrationen werden bei diesem Ansatz dadurch klein gehalten, dass die Spiegel nur auf einem schmalen Ring um das Loch verspiegelt sind.

Die Möglichkeit nichtkollinearer Erzeugung hoher Harmonischer durch Überlagerung zweier Strahlen unter einem Winkel im Fokus ist in A. Ozawa, A. Vernaleken, W. Schneider, I. Gotlibovych, Th. Udem, T.W. Hänsch, "Non-collinear high harmonic generation: a promising outcoupling method for cavity-assisted XUV generation," Opt. Expr. 16, 6233-6239 (2008) beschrieben. Dieses Prinzip kann erweitert werden auf den Fall zweier sich kreuzender Überhöhungsresonatoren, wobei dann nicht ein Spiegel mit Loch eingesetzt werden muss, sondern die beiden Fokussierspiegel der Resonatoren bis auf einen kleinen Spalt aneinander geschoben werden können. Das System ist aufwendig, da zwei Überhöhungsresonatoren gleichzeitig kontrolliert und aufeinander abgestimmt werden müssen und zwar sowohl die Synchronisation der umlaufenden Pulse also auch die geometrische Justage betreffend. Die Breite des Spalts zur Auskopplung ist durch die Verluste für die fundamentale Strahlung begrenzt, die sich unter einem möglichst kleinen nichtkollinearen Winkel im Fokus schneiden, um dort ein Interferenzmuster mit wenigen Streifen zu bilden, von dem der Divergenzwinkel der hohen Harmonischen abhängt. Es wird erwartet, dass die hohen Harmonischen mit einer Effizienz >20% ausgekoppelt werden können.

Eine geometrische Auskopplung hat den entscheidenden Vorteil, dass sie hinsichtlich mittlerer Leistung und Pulsspitzenleistung skalierbar ist, da keine Nichtlinearitäten oder Dispersion für die Fundamentalstrahlung eingeführt werden. Für Wellenlängen kleiner als einige 10 nm ist bisher kein anderer Ansatz demonstriert

Aktive und passive Überhöhungsresonatoren mit einem Resonator-internen Hindernis sind z.B. aus Y.C. Huang et al., Nucl. Instruments and Methods in Phys. Research A358 (1995) 315 und M. Xie et al., Proc SPIE 1868 (1993) 150 bekannt.

Die Aufgabe der vorliegenden Erfindung besteht darin, einen optischen Resonator anzugeben, der einen direkten geometrischen Zugang zur optischen Achse für die Ein- oder Auskopplung von Strahlung ermöglicht, ein Intensitätsmaximum auf der optischen Achse aufweist und in einfacher Weise realisiert werden kann.

*Darstellung der Erfindung*

Die Aufgabe wird mit dem optischen Resonator gemäß Patentanspruch 1 gelöst. Vorteilhafte Ausgestaltungen des Resonators sind Gegenstand der abhängigen Patentansprüche oder lassen sich der nachfolgenden Beschreibung sowie den Ausführungsbeispielen entnehmen.

Der vorgeschlagene optische Resonator besteht aus mehreren Spiegeln, durch die die optische Achse des Resonators festgelegt ist. Im Resonator ist mindestens eine Durchgangsöffnung in einem der Spiegel oder mindestens ein Ein- oder Auskoppelelement auf der optischen Achse bzw. im Strahlengang angeordnet, die ein Hindernis für die zirkulierende Strahlung bilden. Die Spiegel sind dabei so ausgewählt und angeordnet, dass der Resonator stabil ist, d.h. dass die Gouy-Phase $\psi \bmod(\pi)$ Werte $0 < \psi < \pi$ annimmt, und ohne das Hindernis erste Eigenmoden besitzt, die zu einer Gruppe von Eigenmoden mit gleicher Resonanzfrequenz gehören, wobei in dem Resonator mindestens drei dieser Gruppen mit unterschiedlicher Resonanzfrequenz existieren und durch das Hindernis durch Kombination der ersten Eigenmoden einer Resonanzfrequenz neue Eigenmoden entstehen, die am Ort des Hindernisses ein Intensitätsminimum aufweisen. Die Spiegel sind somit so angeordnet, dass im Resonator ohne Hindernis eine Entartung einiger (nicht aller) transversaler Eigenmoden auftritt. In einem stabilen optischen Resonator in obigem Sinne werden nur Gauß-Hermite- oder Gauß-Laguerre-Moden der im Resonator umlaufenden optischen Strahlung zu einem q-Parameter reproduziert. Der q-Parameter stellt hierbei den komplexen Strahlparameter $q = z + i \cdot z_R$ dar, wobei $z$ den Abstand zur Strahltaille und $z_R$ die Rayleighlänge bezeichnen. Auf der optischen Achse ist eine Durchgangsöffnung in wenigstens einem der Spiegel ausgebildet oder ein Ein- oder Auskoppelelement angeordnet, das für die zirkulierende Strahlung undurchlässig sein kann. Die Abmessungen dieser Durchgangsöffnung bzw. des Auskoppelelementes sind dabei selbstverständlich so gewählt, dass die Zirkulation der optischen Strahlung im Resonator zwar beeinflusst, nicht aber verhindert wird. Die Durchgangsöffnung bzw. das Ein- oder Auskoppelelement haben daher in zumindest einer Dimension Abmessungen, die geringer als der Strahlradius der umlaufenden Strahlung an dieser Stelle sind. Über die Durchgangsöffnung bzw. das Ein- oder Auskoppelelement wird ein direkter geometrischer Zugang zur optischen Achse des Resonators erreicht, über den Strahlung ein- bzw. ausgekoppelt werden kann. Unter einem direkten geometrischen Zugang ist hierbei insbesondere ein Strahlweg zu verstehen, der keinen Durchgang durch ein dispersives oder absorbierendes optisches Medium erfordert. Der vorgeschlagene optische Resonator zeichnet sich dadurch aus, dass die Spiegel so angeordnet sind, dass eine Entartung mehrerer transversaler Eigenmoden des Resonators ohne Hindernis auftritt, durch deren Kombination am Ort der Durchgangsöffnung oder des Ein- oder Auskoppelelements im Resonator mit Hindernis ein Intensitätsminimum erreicht wird. Durch diese Einstellung des Resonators werden die durch die Durchgangsöffnung oder das Ein- oder Auskoppelelement verursachten Verluste für die umlaufende Strahlung minimiert, so dass ein optischer Resonator mit hoher Finesse und damit großen Überhöhungen ermöglicht wird. Bei dem vorgeschlagenen optischen Resonator wird somit die Entartung von höheren transversalen Resonatormoden ausgenutzt, um die Verluste zu minimieren. Hierzu muss beispielsweise bei einem Ringresonator mit zwei Fokussierspiegeln lediglich der Abstand der Fokussierspiegel geeignet eingestellt werden. Der optische Resonator weist damit einen einfachen Aufbau auf und bietet im Falle des Ringresonators Designfreiheit hinsichtlich der Resonatorlänge und des Fokusdurchmessers.

Der vorgeschlagene optische Resonator, bei dem eine Entartung einiger (nicht aller) transversaler Resonatormoden auftritt, wird im Folgenden zur Abgrenzung gegenüber einem abbildenden Resonator als quasiabbildender Resonator bezeichnet. Die Unterschiede zwischen einer Abbildung und einer Quasiabbildung im Sinne der vorliegenden Patentanmeldung wird im Folgenden näher erläutert.

Eine Abbildung liegt vor, wenn alle geometrisch-optischen Strahlen, die von einem Punkt in der Objektebene ausgehen, sich in einem Punkt in der Bildebene treffen, unabhängig von ihrem Winkel gegen die optische Achse. Für

$$M = \begin{bmatrix} A & B \\ C & D \end{bmatrix},$$

eine Strahltransfermatrix die das optische System beschreibt, bedeutet das, dass der $B$-Eintrag verschwindet. Dann gibt der $A$-Eintrag die Vergrößerung der Abbildung an. Die Abbildung kann auch im Modenbild verstanden werden. Eine beliebige transversale Feldverteilung kann nach dem vollständigen Orthonormalsystem der Gauß-Hermite-Moden entwickelt werden. Die Gauß-Hermite-Moden haben die Eigenschaft, dass sich ihre Form bei der Propagation nicht verändert. Da diese Moden bei der Propagation aber eine unterschiedliche longitudinale Phase $\phi_{n,m}$ aufsammeln, ändert sich die Form der zusammengesetzten Feldverteilung, da die Moden an unterschiedlichen Orten entlang der Propagationsrichtung mit unterschiedlichen relativen Phasen addiert werden. Die longitudinale Phase, die eine Mode bei der Propagation um die Strecke $\Delta z$ aufsammelt, ist $\phi_{n,m} = k \cdot \Delta z + (1/2 + n)\cdot \psi_x + (1/2 + m)\cdot \psi_y$, wobei $n$, $m$ die Modenordnung und $\psi_x$, $\psi_y$ die Gouy-Phase in x- und y-Richtung bezeichnen. Die Gouy-Phase gibt also an, welche Phase die Gauß-Hermite-Moden zusätzlich zu einer ebenen Welle aufsammeln, und ist für die transversalen Richtungen

$$\tan(\psi) = \frac{z_R \Delta z}{z_R^2 + z^2 + z\,\Delta z}$$

jeweils durch mit dem komplexen Strahlparameter $q = z + i \cdot z_R$ gegeben.

Dabei bezeichnet z den Abstand zur Strahltaille und $z_R$ die Rayleighlänge.

Eine Abbildung liegt gerade dann vor, wenn die Gouy-Phase $\psi$ mod($2\pi$) = 0 ist, da dann alle Moden in der Bildebene wieder mit der gleichen relativen Phase addiert werden, und somit die Feldverteilung der Objektebene reproduziert wird, evtl. mit Vergrößerung und anderer Divergenz. Wenn die Gouy-Phase $\psi$ mod($2\pi$) = $\pi$ beträgt, liegt eine Abbildung auf dem Kopf, also mit negativer Vergrößerung vor, da dann alle ungeraden Moden mit einem negativen Vorzeichen versehen werden. Die Gouy-Phase, die in einem optischen System aufgesammelt wird, hängt vom Eingangsstrahlparameter und dem optischen System beschrieben durch die Strahltransfermatrix ab. Es gilt

$$\tan(\psi) = \frac{z_R B}{\left(z_R^2 + z^2\right)A + z B} \; .$$

Für den Fall $B = 0$ ist also $\psi = 0$ oder $\pi$ unabhängig vom Strahlparameter.

$$\psi = 2\pi \frac{p}{\Delta n},$$

Für ausgezeichnete Werte der Gouy-Phase $p$, $\Delta n \in N$ sind alle Moden mit Modenzahl $n = n_0$ + $l \cdot \Delta n$, $n_0$, $l \in N$ in Phase, so dass eine Feldverteilung, die sich nur aus diesen Moden zusammensetzt, reproduziert wird. Diesen Fall nennen wir Quasiabbildung. Eine Quasiabbildung ist durch die Modenzahldifferenz $\Delta n$ gekennzeichnet, mit $\Delta n \geq 3$. Die Fälle $\Delta n = 1$ und $\Delta n = 2$ ergeben eine Abbildung mit Vergrößerung $\pm 1$. Während bei einem abbildenden optischen System die Gouy-Phase 0 oder $\pi$ ist für jeden beliebigen q-Parameter, gibt es kein optisches System, das für

$$\psi = \frac{2\pi}{\Delta n}$$

einen beliebigen q-Parameter eine Gouy-Phase von mit $\Delta n = 3, 4, 5...$ aufprägen würde. In einem stabilen optischen Resonator aber ist der Eigen-q-Parameter dadurch ausgezeichnet, dass er sich bei jedem Umlauf reproduziert. Die Gouy-Phase pro Resonatorumlauf ist cos($\psi$) = $m$ := $(A+D)/2$ mit den Einträgen der Resonatorumlaufmatrix $A,D$. Diese Phase ist allein durch den Resonator bestimmt, d.h. eine Funktion der Abstände und Krümmungsradien der Spiegel und ggf. weiterer optischer Elemente.

Der Stabilitätsbereich des Resonators ist durch die Bedingung -1<$(A+D)/2 < 1$ gegeben. Innerhalb des Stabilitätsbereichs läuft die Gouy-Phase also von 0 bis $\pi$ bzw. von $\pi$ bis $2\pi$. Innerhalb des Stabilitätsbereichs können daher

$$\psi = \frac{\pi}{2} \; bzw. \; \frac{3\pi}{2},$$

beliebige Quasiabbildungen eingestellt werden. Eine Quasiabbildung mit d.h. $\Delta n = 4$ liegt immer in der Mitte des Stabilitätsbereichs mit $A + D = 0$ vor. Dieser Fall bedeutet, dass eine Abbildung nach zwei Umläufen

$$M^2 = \begin{bmatrix} A & B \\ C & D \end{bmatrix}^2 = \begin{bmatrix} A^2 + BC & B(A+D) \\ C(A+D) & D^2 + BC \end{bmatrix}.$$

vorliegt. Die Strahltransfermatrix für zwei Umläufe ist Der $B$-Eintrag dieser Matrix verschwindet, wenn entweder schon der einfache Umlauf eine Abbildung ist, oder wenn $A + D = 0$ für den einfachen Umlauf gilt. In einem solchen Resonator sind nun z.B. alle Moden mit Modenzahl $n = 0, 4, 8...$ gleichzeitig resonant und eine Feldverteilung, die sich aus diesen Moden zusammensetzt, kann im Resonator angeregt werden und wird nach einem Umlauf reproduziert.

Unter einem abbildenden Resonator ist ein telezentrisch abbildender mit Vergrößerung $\pm 1$ zu verstehen, für den die Strahltransfermatrix die positive oder negative Einheitsmatrix ist, da nur für diesen Fall einer Abbildung der q-Parameter bei einem Umlauf reproduziert wird, der Resonator also stabil ist. Es ist leicht zu sehen, dass die Bedingung der Stabilität und der Abbildung für einen Resonator nur durch diese beiden Fälle gleichzeitig erfüllt sein kann. Ein Resonator ist stabil, wenn es einen q-Parameter gibt, der sich bei einem Umlauf gemäß dem ABCD-Gesetz

$$q = \frac{Aq+B}{Cq+D}$$ mit der Strahltransfermatrix $$M = \begin{bmatrix} A & B \\ C & D \end{bmatrix}$$ reproduziert. Aus dieser Bedingung folgt

$$q = \frac{A-D}{2C} \pm \frac{\sqrt{(A+D)^2 - 4}}{2C},$$ wobei benutzt wurde, dass die Determinante der

Strahltransfermatrix eins ist: det($M$) = $AD - BC$ = 1. Damit der q-Parameter einen Strahl beschreibt, muss er eine endliche Rayleighlänge, d.h. einen endlichen Imaginärteil besitzen. Das bedeutet, es muss |$A + D$| < 2 gelten. Der C-Eintrag kann dann nicht null werden, da aus |$A + D$| < 2 folgt $AD$ < 1 und mit $AD - BC$ = 1 folgt $C \neq 0$. Am Rand des Stabilitätsbereichs, d.h. $A + D$ = $\pm 2$ kann für den Fall $AD$ = 1, d.h. $A = D = \pm 1$ gelten $C$ = 0, ohne dass dadurch $AD - BC$ = 1 verletzt wird. Dann liegt für den Imaginärteil des q-Parameters der Fall Im($q$) = 0/0 vor und es kann eine endliche Lösung geben. Mit $A = D = \pm 1$, $C$ = 0 folgt für den q-Parameter $q = q + B$. Eine Lösung existiert also nur, falls auch $B$ = 0 ist. Dann wird jeder beliebige q-Parameter reproduziert und die Strahltransfermatrix ist die positive oder negative Einheitsmatrix. Eine telezentrische Abbildung mit Vergrößerung $\pm 1$ kann also nur am Stabilitätsrand mit $A + D$ = $\pm 2$ existieren. Andererseits liegt am Stabilitätsrand nicht notwendig eine Abbildung vor, sondern nur, wenn auch $B = C$ = 0 gilt.

Ein abbildender Resonator ist nicht stabil in dem Sinne, dass er keinen definierten Eigen-q-Parameter besitzt. Vielmehr wird jeder beliebige q-Parameter bei einem Resonatorumlauf reproduziert. Aus diesem Grund unterscheidet sich ein abbildender Resonator fundamental von einer Quasiabbildung. Dieser Unterschied spiegelt sich auch darin wider, dass eine Quasiabbildung nur in einem Resonator definiert ist, während eine Abbildung in einem optischen System realisiert werden kann, das ein Bild unabhängig vom q-Parameter reproduziert.

Die Gauß-Hermite-Moden zum Eigen-q-Parameter sind Eigenmoden des stabilen Resonators ohne die Feldverteilung begrenzende Blenden. Wenn Blenden eingeführt werden, sind die Gauß-Hermite-Moden keine Eigenmoden mehr. Die Berechnung der neuen Eigenmoden muss in der Regel dann numerisch erfolgen. Für den Fall einer Quasiabbildung, in der eine Klasse von Gauß-Hermite-Moden entartet ist, können neue Eigenmoden des Resonators als Kombination der entarteten Gauß-Hermite-Moden konstruiert werden. Wird nun ein Hindernis in den Resonator eingeführt, so bleibt eine Modenkombination dann eine Eigenmode, wenn die Feldverteilung am Ort des Hindernisses verschwindet. Eine solche Eigenmode erfährt dann keine Verluste an dem Hindernis. Eine Feldverteilung, die auf einer endlichen Fläche eines Hindernisses verschwindet, kann nur durch die Kombination von unendlich vielen Moden dargestellt werden. Es stellt sich aber heraus, dass die sich bei einem endlichen Hindernis einstellende Feldverteilung durch die Kombination weniger entarteter Moden beschreiben lässt, die am Ort des Hindernisses nur eine kleine Feldstärke hat und folglich geringe Verluste erfährt. Von besonderem Interesse ist ein Hindernis auf der optischen Achse des Resonators, das durch ein Loch oder einen Schlitz in einem Resonatorspiegel oder durch ein separates Ein- oder Auskoppelelement entsteht und direkten geometrischen Zugang zur optischen Achse des Resonators erlaubt.

Je nach Geometrie des Resonators und Gouy-Phase, d.h. Modenzahldifferenz der Quasiabbildung kann eine Vielzahl von Feldverteilungen konstruiert werden, die ein Hindernis auf der optischen Achse vermeiden. Zunächst muss zwischen Resonatoren mit kartesischer und Zylindersymmetrie unterschieden werden. Für einen Resonator mit Zylindersymmetrie sind die Gauß-Laguerre-Moden $GL^l_p$ mit der radialen und azimutalen Modenzahl $p$ und $l$ Eigenmoden des Resonators ohne Hindernis, für kartesische Symmetrie sind es die Gauß-Hermite-Moden $GH_{n,m}$ mit der Modenzahl in x- und y-Richtung $n$ und $m$. Die Phase auf der Achse lautet $\phi_{p,l} = k \cdot L + (2p + l + 1) \cdot \psi$ und $\phi_{n,m} = k \cdot L + (1/2 + n) \cdot \psi_x + (1/2 + m) \cdot \psi_y$, mit der Gouy-Phase $\psi$ und Resonatorlänge $L$. Zylindersymmetrie ist in linearen Resonatoren ohne astigmatische optische Elemente realisiert, in Ringresonatoren führt der Einfallswinkel des Strahls auf den gekrümmten Spiegeln eine Elliptizität ein, so dass im Allgemeinen $\psi_x \neq \psi_y$ gilt. Entsprechend kann ein Loch im Spiegel im ersten Fall bspw. als kreisförmiges Loch, im zweiten Fall als Schlitz ausgeführt werden. Der einfachste Fall, durch eine Modenkombination eine Nullstelle an der Stelle des Hindernisses zu erzeugen, ist die Grundmode mit der nächsten resonanten transversalen geraden Mode zu kombinieren. Für $\psi = \frac{\pi}{2}$ oder $\frac{3\pi}{2}$ ist $\Delta n$ = 4 und $\Delta p$ = 2 und die Modenkombinationen sind $\sqrt{3/11}\, GH_{0,0} - \sqrt{8/11}\, GH_{4,0}$ und $\sqrt{1/2}\, GL^0_0 - \sqrt{1/2}\, GL^0_2$. Für $\psi = \frac{\pi}{3}$ oder $\frac{5\pi}{3}$ ist $\Delta m$ = 6 und $\Delta p$

= 3 und die Modenkombinationen sind $\sqrt{5/21}\,GH_{0,0} - \sqrt{16/21}\,GH_{6,0}$ und $\sqrt{1/2}\,GL_0^0 - \sqrt{1/2}\,GL_3^0$. Für

$$\psi = \frac{2\pi}{3} \text{ oder } \frac{4\pi}{3}$$ ist zwar $\Delta n = 3$, jedoch ist die Mode $GH_{3,0}$ ungerade und kann nicht zusammen mit der Grundmode ein Loch auf der Achse ergeben.

Die Koeffizienten vor den Moden sind durch die Normierung der in der Modenkombination enthaltenen Leistung auf eins und durch die Bedingungen gegeben, dass das Feld auf der optischen Achse verschwindet.

Die Modenkombination ergibt am Ort des Hindernisses eine Nullstelle auf der optischen Achse. Bei der Propagation im Resonator sammeln die Moden eine unterschiedliche Phase auf, so dass die Intensität auf der Achse mit $I(z) = I_{max} \sin^2(\Delta n/2 \cdot \psi(z))$ oszilliert. Für den Fall, dass sich das Loch in einem Fokussierspiegel hinter einem resonatorinternen Fokus befindet, ist die Intensität im Fokus auf der Achse maximal für den Fall $\psi = \frac{\pi}{3}$ und null für den Fall $\psi = \frac{\pi}{2}$. Dann ist die Intensität maximal eine Rayleighlänge vor und hinter dem Fokus.

Die Mode $GH_{1,0}$ hat bereits eine Nullstelle auf der Achse. Die Breite des Schlitzes kann durch Kombination mit der Mode $GH_{5,0}$ vergrößert werden. Die Kombination, die den breitesten Schlitz erlaubt, ist

$$\sqrt{15/23}\,GH_{1,0} - \sqrt{8/23}\,GH_{5,0}.$$

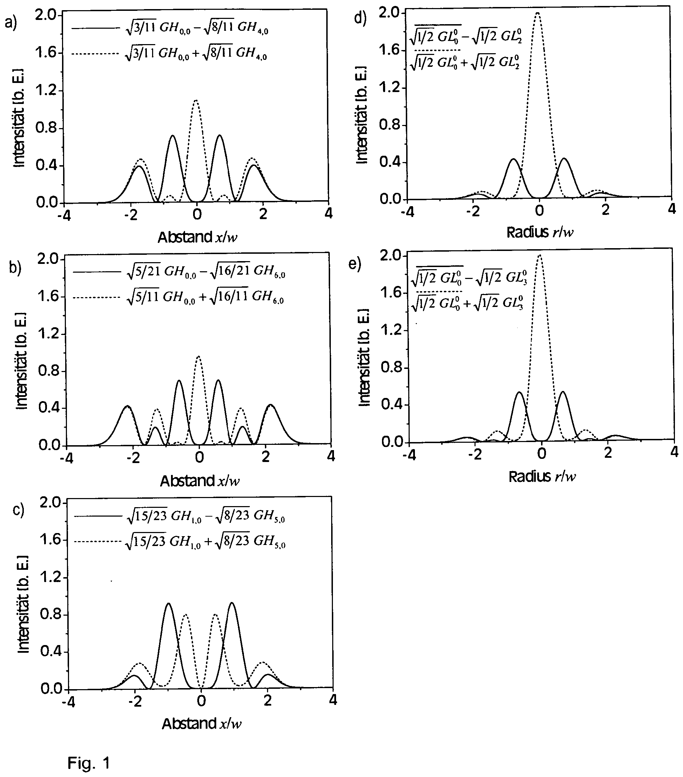

Die Figur 1 zeigt die Intensitätsverteilungen der unterschiedlichen Modenkombinationen in kartesischer und zylindrischer Geometrie am Ort des Hindernisses (durchgezogene Linie) und am Ort maximaler Intensität auf der optischen Achse (gestrichelte Linie). Kartesische Geometrie: $GH_{00}+GH_{40}$ (a), $GH_{00}+GH_{60}$ (b), $GH_{10}+GH_{50}$ (c). Zylindrische Geometrie: $GL_0^0+GL_2^0$ (d), $GL_0^0+GL_3^0$ (e). Für die zylindrische Geometrie ist zur übersichtlicheren Darstellung die Verteilung für negative Radien fortgesetzt.

Zusätzlich können weitere höhere transversale Moden, die resonant sind, zur Feldverteilung beitragen. Wenn dieser Beitrag unerwünscht ist, kann er durch Blenden, die die Feldverteilung von außen einschränken, unterdrückt werden, da die höheren transversalen Moden räumlich weiter ausgedehnt sind.

Die oben diskutierten Modenkombinationen sind Eigenmoden eines Resonators, für den diese Moden entartet sind, und mit einem Hindernis auf der optischen Achse, dessen Ausdehnung als klein angenommen wird. Kleine Ausdehnung des Hindernisses bedeutet hier, dass die Verluste für die Kombinationen aus $GH$- oder $GL$-Moden klein sein sollen, d.h. bei <1/1000 liegen. Für diesen Fall können die Modenkombinationen als Eigenmoden des Resonators mit Hindernis angenommen werden. Für die in Figur 1 dargestellten Moden bedeutet das eine Ausdehnung des Hindernisses von einem Bruchteil -1/10 des Gaußschen Strahldurchmessers. Die Gauß-Hermite-Moden selbst sind bei Anwesenheit des Hindernisses keine Eigenmoden mehr. Weitere Eigenmoden können konstruiert werden, indem weitere resonante Gauß-Hermite-Moden hinzugenommen werden. Für den Fall einer Quasiabbildung mit $\Delta n = 4$ in kartesischer Geometrie lautet die einfachste Schlitzmode, d.h. Modenkombination, die eine Nullstelle auf der optischen Achse aufweist:

$$a_1(x) = \sqrt{\frac{3}{11}}GH_{0,0}(x) - \sqrt{\frac{8}{11}}GH_{4,0}(x).$$

Eine weitere Schlitzmode, die ebenfalls eine Nullstelle auf der optischen Achse aufweist, und orthogonal zur ersten Schlitzmode ist, kann durch Hinzunahme der nächsten resonanten Gauß-Hermite-Mode konstruiert werden:

$$a_2(x) = \sqrt{\frac{280}{2321}}GH_{0,0}(x) + \sqrt{\frac{105}{2321}}GH_{4,0}(x) - \sqrt{\frac{1936}{2321}}GH_{8,0}(x).$$

Eine weitere Schlitzmode, orthogonal zu den ersten beiden, lautet:

$$a_3(x) = \sqrt{\frac{29568}{404909}}GH_{0,0}(x) + \sqrt{\frac{11088}{404909}}GH_{4,0}(x) + \sqrt{\frac{8085}{404909}}GH_{8,0}(x) - \sqrt{\frac{356168}{404909}}GH_{12,0}(x).$$

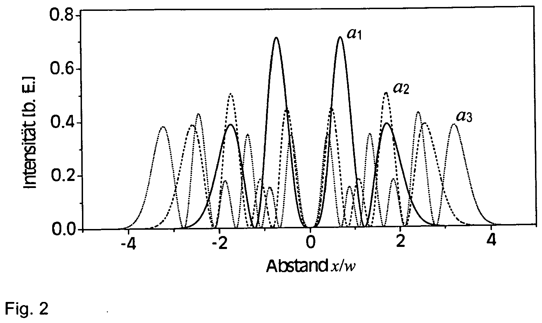

Diese Eigenmoden des Resonators mit einem schlitzförmigen Hindernis auf der optischen Achse und Quasiabbildung mit Modenzahldifferenz $\Delta n = 4$ sind in Figur 2 dargestellt. Mit zunehmender Modenordnung haben diese Schlitzmoden mehr Nullstellen des elektrischen Felds, sind weiter ausgedehnt und haben eine größere Intensität nahe der optischen Achse. Durch Beimischen höherer Schlitzmoden zur einfachen Schlitzmode $a_1$ kann der Bereich mit kleiner Intensität um die optische Achse aber vergrößert werden, so dass ein breiteres Hindernis bei kleinen Verlusten möglich wird. Außerdem ändert sich durch die Beimischung der räumliche Überlapp mit dem Einkoppelstrahl.

Der vorgeschlagene optische Resonator ist in einer vorteilhaften Ausgestaltung als Ringresonator ausgebildet, der mindestens zwei gekrümmte Spiegel aufweist, über die der Taillenradius der umlaufenden Strahlung festgelegt ist. Vorzugsweise ist die Durchgangsöffnung bei dieser Ausgestaltung in einem der gekrümmten Spiegel ausgebildet. Die Entartung der gewünschten transversalen Resonatormoden wird bei fester Resonatorlänge über den Abstand zwischen den beiden gekrümmten Spiegeln eingestellt.

Grundsätzlich kann die Durchgangsöffnung bzw. das Ein- oder Auskoppelelement eine beliebige geometrische Form aufweisen. Zur Minimierung der Verluste für die umlaufende Strahlung ist jedoch im Falle des Ringresonators eine schlitzförmige Durchgangsöffnung bzw. ein schmales, bspw. streifenförmiges, optisches Auskoppelelement vorzuziehen, deren bzw. dessen Längserstreckung in der Ebene des Strahlengangs liegt. Die Quasiabbildung wird dann in der Richtung senkrecht zur Ebene des Strahlengangs eingestellt. Da die Feldverteilung in der Richtung der Quasiabbildung weiter ausgedehnt ist als in der anderen transversalen Richtung, erlaubt diese Ausführung einen kleineren Einfallswinkel auf den gekrümmten Spiegeln.

Der vorgeschlagene optische Resonator lässt sich auch mit weiteren optischen Elementen ausführen. Beispielsweise können zusätzliche Spiegel eingebracht werden, um eine zusätzliche Faltung des Resonators für einen kompakteren Aufbau zu erreichen. In einer Ausgestaltung werden zusätzlich Phasenmasken auf mindestens zwei Spiegeln eingesetzt, um ein Intensitätsmaximum auf der optischen Achse im Fokus in dem Fall zu erreichen, dass eine Modenkombination benutzt wird, in der die bezüglich der optischen Achse gegenüberliegenden Lobes (Strahlungskeulen) gegenphasig schwingen (ungerade Modenkombination). Auf eine derartige Ausgestaltung wird bei den nachfolgenden Ausführungsbeispielen näher eingegangen. So können auf einem ersten und einem zweiten der Spiegel des Resonators Phasenmasken aufgebracht sein, wobei sich der zweite Spiegel mit Phasenmaske am Ort einer Abbildung des ersten Spiegels mit Phasenmaske befindet. Damit lässt sich ein Intensitätsmaximum auf der optischen Achse an einem Ort im Resonator für eine Eigenmode des Resonators mit Hindernis erreichen, insbesondere zwischen dem ersten und dem zweiten oder einem weiteren Spiegel und/oder in einer Strahltaille des Resonators, für die an dem ersten Spiegel die Feldstärke auf der optischen Achse verschwindet.

Selbstverständlich lässt sich der vorgeschlagene optische Resonator in beliebiger Weise realisieren. Eine teilweise Entartung lässt sich in jedem stabilen Resonator einstellen. Die Durchgangsöffnung kann hierbei in jedem beliebigen Spiegel vorgesehen werden. Das Ein- oder Auskoppelelement kann an beliebiger Stelle im Resonator angeordnet werden.

*Kurze Beschreibung der Zeichnungen*

Der vorgeschlagene optische Resonator wird im Folgenden anhand von Ausführungsbeispielen in Verbindung mit den Zeichnungen nochmals näher erläutert. Hierbei zeigen:

Fig. 1 Beispiele für Intensitätsverteilungen der unterschiedlichen Modenkombinationen in kartesischer und zylindrischer Geometrie am Ort des Hindernisses sowie am Ort maximaler Intensität auf der optischen Achse;

Fig. 2 ein Beispiel für Intensitätsverteilungen eines Resonators mit schlitzförmigem Hindernis auf der optischen Achse bei Modenzahldifferenz $\Delta n = 4$;

Fig. 3 ein Beispiel für eine Ausgestaltung des vorgeschlagenen optischen Resonators als Ringresonator;

Fig. 4 ein weiteres Beispiel für eine Ausgestaltung des vorgeschlagenen optischen Resonators als Ringresonator mit zusätzlichen Phasenmasken;

Fig. 5a ein Stabilitätsdiagramm eines linearen 2-Spiegel-Resonators;

Fig. 5b den Stabilitätsbereich des Ringresonators aus Figur 3;

Fig. 6 ein Beispiel für eine gemessene Intensitätsverteilung auf einem Spiegel mit Durchgangsöffnung eines vorgeschlagenen optischen Resonators;

Fig. 7 Messdaten und auf einem Modell basierende Verstimmungskurve eines vorgeschlagenen optischen Resonators mit zusätzlicher Modenblende (Teilabbildung a) und ohne zusätzliche Modenblende (Teilabbildung b);

Fig. 8 die gemessene Intensitätsverteilung des überhöhten Felds eines vorgeschlagenen optischen Resonators bei maximaler Überhöhung am Ort des Hindernisses auf der optischen Achse (Teilabbildung a), am Ort maximaler Intensität auf der optischen Achse (Teilabbildung b) sowie Diagramm der Übereinstimmung zwischen Messung und Modelldaten (Teilabbildung c);

Fig. 9 die berechnete Überhöhung und Breite der Verstimmungskurve als Funktion der Schlitzbreite für unterschiedliche Moden des Einkoppelstrahls; und

Fig. 10 die berechnete Verstimmungskurve für einen Ringresonator bei unterschiedlicher Blendenposition für unterschiedliche Moden des Einkoppelstrahls.

*Wege zur Ausführung der Erfindung*

Die unterschiedlichen Intensitätsverteilungen der Figuren 1 und 2 wurden bereits erläutert.

Als Beispiel für einen abbildenden Resonator sei zunächst der lineare symmetrische Resonator diskutiert. Er ist charakterisiert durch die Resonatorlänge $L$ und den Krümmungsradius $R_K$ der beiden Spiegel. Es gilt

$$\cos(\psi) = m = 1 - 4\frac{L}{R_K} + 2\frac{L^2}{R_K^2}.$$

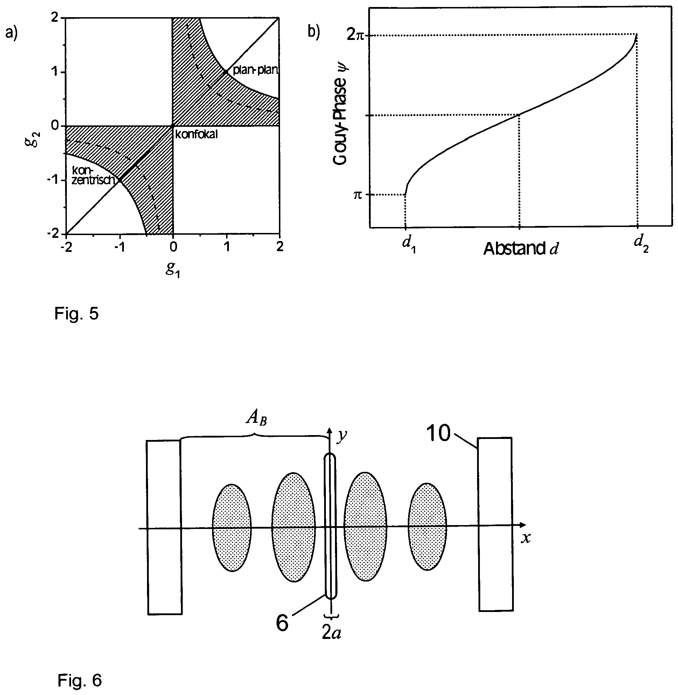

Der Stabilitätsbereich setzt sich zusammen aus zwei Bereichen, die für $L = R_K$ aneinander grenzen. Die Stabilitätsgrenzen sind also die Fälle des Plan-plan-Resonators mit $L/R_K = 0$ (wegen $R_K \rightarrow \infty$), des konfokalen Resonators mit $L = R_K$ und des konzentrischen Resonators mit $L = 2R_K$. Die Gouy-Phase des Resonators läuft von 0 für den Plan-plan-Resonator über $\pi$ für den konfokalen bis $2\pi$ für den konzentrischen Resonator. Eine Abbildung liegt nur für den konfokalen Fall vor. An den anderen Stabilitätsgrenzen divergiert der Eigen-q-Parameter, für den die Gouy-Phase 0 bzw. $2\pi$ ist. Das Stabilitätsdiagramm ist in Figur 5a dargestellt. Für den linearen symmetrisch-konfokalen Resonator gibt es keinen Eigen-q-Parameter, da sich jeder q-Parameter nach einem Umlauf reproduziert. Ein q-Parameter ($z_R = L/2$) ist aber dadurch ausgezeichnet, dass er sich als Eigen-q-Parameter im Limes für $L \rightarrow R_K$ ergibt. Das ist im Allgemeinen nicht der Fall, wenn der abbildende Zustand über verschiedene stabile Zustände erreicht werden kann, die im Limes unterschiedliche q-Parameter ergeben.

In einem Ringresonator mit zwei Fokussierspiegeln mit Krümmungsradius $R_K$ im Abstand $d$ und Resonatorlänge $L$ ist keine Abbildung möglich (außer für den Fall $L = 2d$, der dem linearen Resonator entspricht). Um einen abbildenden Ringresonator zu erreichen muss mindestens ein weiterer gekrümmter Spiegel hinzugefügt werden.

Ein abbildender Resonator kann also durch einen symmetrisch-konfokalen Resonator realisiert werden, für den der abbildende Zustand mit nur einem Parameter, der Resonatorlänge, eingestellt wird - vorausgesetzt der Resonator ist nicht mit zwei Resonatorarmen ausgeführt, wodurch sich zwei einzustellende Längen ergeben. Für diesen Resonator ist die Resonatorlänge durch den Krümmungsradius vorgegeben. Für andere Realisierungsmöglichkeiten eines abbildenden Resonators ergeben sich mehrere Abstände, die gleichzeitig genau eingestellt werden müssen, um die Abbildung zu erreichen. Eine Quasiabbildung hingegen kann in jedem stabilen Resonator eingestellt werden, da innerhalb des Stabilitätsbereichs die Gouy-Phase von 0 bis $\pi$ oder $\pi$ bis $2\pi$ durchlaufen wird.

Die einfachste Realisierung eines Ringresonators ist durch einen Resonator mit zwei gekrümmten Spiegeln mit Krümmungsradius $R_K$ im Abstand $d$ und Resonatorlänge $L$ gegeben. Die Gouy-Phase ist gegeben durch

$$\psi = \pi + \arccos\left(\frac{2R_K L - 2dL + 2d^2 - R_K^2}{R_K^2}\right).$$

Bei fester Resonatorlänge wird der Stabilitätsbereich aufgespannt durch den Abstand $d$ mit den Stabilitätsgrenzen $d_1 = R_K$,

$$d_2 = \frac{L - \sqrt{L^2 - 4R_K L}}{2}.$$

Eine Quasiabbildung mit $\psi = 3/2\pi$ liegt in der Mitte des Stabilitätsbereichs

$$d_0 = \frac{L - \sqrt{L^2 + 2R_K^2 - 4R_K L}}{2}$$

vor. Für diesen Fall sind die Rayleighlängen im kurzen und im langen Arm des Resonators

$$z_R = \frac{R_K^2}{2L - 4R_K \pm 2\sqrt{L^2 + 2R_K^2 - 4R_K L}}.$$

Die zugehörigen Taillenradien sind

$$w_0 = \sqrt{\frac{\lambda}{\pi}} \frac{R_K}{\sqrt{2L - 4R_K \pm 2\sqrt{L^2 + 2R_K^2 - 4R_K L}}}$$

mit der Wellenlänge $\lambda$. Über den Krümmungsradius $R_K$ kann also bei gegebener Länge L der Fokusdurchmesser $w_0$ im kurzen Arm festgelegt werden mit

$$R_K = \frac{4\pi w_0^2}{\lambda} \left( \sqrt{\frac{1}{2} + \frac{L\lambda}{4\pi w_0^2}} - 1 \right) \approx 2 w_0 \sqrt{\frac{\pi}{\lambda}} \sqrt{L} .$$

Der Radius auf den gekrümmten Spiegeln ist

$$w_1 = \sqrt{\frac{\lambda L}{\pi}} \sqrt[4]{1 - 2\frac{R_K}{L} + \frac{R_K^2}{L^2}} = \sqrt{\frac{\lambda L}{\pi}} \left( 1 - \frac{R_K}{2L} - O\left(\frac{R_K^2}{L^2}\right) \right) ,$$

also in erster Näherung proportional zur Wurzel der Resonatorlänge und unabhängig vom Krümmungsradius. Der Fokusradius ist

$$w_0 = \sqrt{\frac{\lambda L}{\pi} \left( \frac{R_K}{2L} + \frac{R_K^2}{2L^2} + O\left(\frac{R_K^3}{L^3}\right) \right)} ,$$

also in erster Näherung proportional zum Krümmungsradius. Der Quotient

$$\chi = \frac{w_1^2}{w_0^2} = \frac{4(L - R_K)}{L - 2R_K - \sqrt{L^2 + 2R_K^2 - 4R_K L}} \approx 4\frac{L^2}{R_K^2} - 12\frac{L}{R_K} .$$

der Querschnittsflächen des Strahls ist

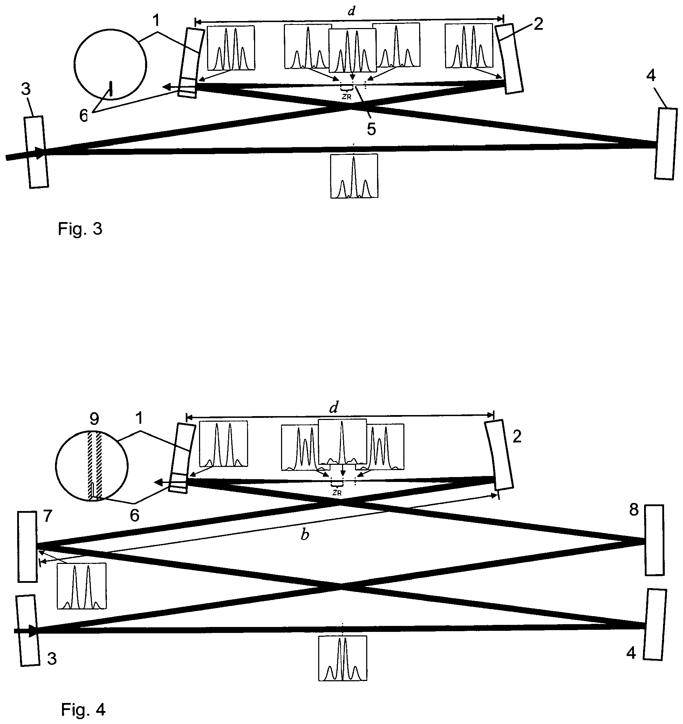

Aufgrund des Einfallswinkels des Strahls auf den gekrümmten Spiegel sind die effektiven Krümmungsradien in den beiden transversalen Richtungen unterschiedlich und damit die Stabilitätsbereiche gegeneinander verschoben. Die effektiven Krümmungsradien sind $R_{K,m} = R_K \cos(\alpha)$ und $R_{K,s} = R_K / \cos(\alpha)$ in meridionaler und sagittaler Richtung mit dem Einfallswinkel $\alpha$ gegen die Oberflächennormale des Spiegels. Die oben angegebenen Gleichungen gelten für die effektiven Krümmungsradien in der jeweiligen Richtung. Am Stabilitätsrand ist der Strahl deshalb stark elliptisch. Wenn der Einfallswinkel klein ist, ist für die Quasiabbildung in einer transversalen Richtung die andere Richtung auch nahe der Mitte des Stabilitätsbereichs und der Strahl annähernd rund. Um den Einfallswinkel auf den gekrümmten Spiegeln klein wählen zu können, kann die Quasiabbildung in der Richtung senkrecht zur Ebene des Strahlengangs eingestellt werden. Die Feldverteilung ist in dieser Richtung weiter ausgedehnt als in der anderen transversalen Richtung, in der die Grundmode angeregt wird. Der Schlitz im Spiegel liegt dann in der Strahlebene. Diese Anordnung ist in Figur 3 skizziert. Figur 5b zeigt den zugehörigen Stabilitätsbereich.

Figur 3 zeigt ein Beispiel für eine mögliche Ausgestaltung des vorgeschlagenen optischen Resonators als Ringresonator. Der Resonator besteht aus zwei gekrümmten Spiegeln 1, 2 (Fokussierspiegel) mit Krümmungsradius $R_K$ und zwei Planspiegeln 3, 4. Einer der beiden Planspiegel 3 dient als Einkoppelspiegel für die in den Resonator eingekoppelte fundamentale Strahlung, deren Strahlengang in der Figur dargestellt ist. Durch die beiden Fokussierspiegel 1, 2 wird ein Fokus 5 zwischen den beiden Fokussierspiegeln in Resonator erzeugt. In einem der beiden Fokussierspiegel 1 (Auskoppelspiegel) ist dabei ein Schlitz 6 ausgebildet, über den Strahlung aus dem Resonator ausgekoppelt werden kann. Dies ist durch den Pfeil angedeutet. Durch Hinzunahme von weiteren Planspiegeln kann die Resonatorlänge L bei einem kompakten Aufbau vergrößert werden. Der Strahlengang liegt in einer Ebene. Der Einfallswinkel $\alpha$ des Strahls auf den Fokussierspiegeln 1, 2 ist klein und für beide Spiegel gleich groß. Wenn der Abstand d der Fokussierspiegel 1, 2 in Abhängigkeit von der Resonatorlänge und dem effektiven Krümmungsradius $R_K / \cos(\alpha)$ richtig eingestellt ist, wird senkrecht zur Zeichenebene eine Quasiabbildung mit der Gouy-Phase $\psi = 3/2\pi$ erreicht, wobei im kurzen Arm ca. die Phase $\psi = \pi$ und im langen Arm ca. $\psi = 1/2\pi$ aufgesammelt wird. Die kleinen Bilder zeigen die Intensitätsverteilung der Modenkombination aus $GH_{0,0}$ und $GH_{4,0}$ (siehe Figur 1a) in der transversalen Richtung senkrecht zur Zeichenebene an ausgewählten Orten. Durch den Schlitz 6 in einem der Fokussierspiegel 1 entsteht ein Zugang zur optischen Achse, der z.B. zur Auskopplung von hohen Harmonischen, die im Bereich des Fokus mit Rayleighlänge $z_R$ in einem Gasjet erzeugt werden, dienen kann. Die Breite des Schlitzes 6 beträgt ca. 1/10 des Gaußschen Strahldurchmessers. Der Auskoppelspiegel mit Schlitz 6 ist zusätzlich in Aufsicht gezeigt. Der räumliche Überlapp der Feldverteilung mit einem einfallenden Gaußstrahl mit dem Eigen-q-Parameter des Resonators ist 27%. Durch Anpassung des q-Parameters des Gaußstrahls in Richtung der Quasiabbildung erreicht der Überlapp 44%.

In einen quasiabbildenden Resonator können weitere optische Elemente eingefügt werden. Z.B. kann das Konzept kombiniert werden mit dem Vorschlag in K.D. Moll, R.J. Jones, J. Ye, "Output coupling methods for cavity-based high-harmonic generation," Opt. Expr. 14 (2006), Phasenmasken auf Spiegeln anzubringen. Ein solcher Resonator erlaubt einen breiteren Schlitz als die Ausführung in Figur 3 und ergibt ein Intensitätsmaximum auf der optischen Achse im Fokus. Eine vorteilhafte Anordnung eines solchen Resonators ist in Figur 4 dargestellt. Auch dieser Resonator ist als Ringresonator ausgebildet, wobei gegenüber dem Resonator der Figur 3 zwei zusätzliche Planspiegel 7, 8 eingesetzt werden. Sowohl der gekrümmte Auskoppelspiegel 1 mit dem Schlitz 6 als auch der weitere Planspiegel 7, der im Abstand *b* zum zweiten gekrümmten Spiegel 2 angeordnet ist, tragen hierbei eine Phasenmaske 9. Die weiteren Planspiegel sind erforderlich, da ein Planspiegel mit Phasenmaske 9 in einem festgelegten Abstand *b* vom Fokussierspiegel liegen muss, ohne die Resonatorlänge vorzugeben. Der Abstand d der Fokussierspiegel 1, 2 ist so gewählt, dass in Abhängigkeit von *L* und $R_K$/cos($\alpha$) in der Ebene senkrecht zur Zeichenebene eine Quasiabbildung mit $\psi$ = 3/2$\pi$ realisiert ist. Der Abstand *b* ist so gewählt, dass der Planspiegel 7 mit Phasenmaske 9 sich am Ort der Abbildung des Auskoppelspiegels 1 befindet. Dazu muss auf der Strecke b die Gouy-Phase aufgesammelt werden, die zwischen den Fokussierspiegeln 1, 2 zu $\psi$ = $\pi$ fehlt. Auf dem anderen Weg zwischen den Spiegeln mit Phasenmasken 9 wird die Gouy-Phase $\psi$ = $\pi$/2 aufgesammelt, so dass sich eine Modenkombination mit $\Delta n$ = 4 reproduziert. Hier kann die Modenkombination aus den ungeraden Gauß-Hermite-Moden $GH_{1,0}$ und $GH_{5,0}$ gewählt werden (siehe Figur 1c), die einen breiten Schlitz erlaubt. Die Schlitzbreite kann 2*a* = 0,28·2*w* des Gaußschen Strahldurchmessers betragen für Verluste von $T^2$ = 0,999. Wenn die Lobes der Modenkombination durch die Phasenmaske auf dem Planspiegel gleichphasig gesetzt werden, ergibt sich im Fokus ein Intensitätsmaximum auf der optischen Achse. Auf dem Auskoppelspiegel 1 reproduziert sich die Feldverteilung dieses Spiegels und durch die weitere Phasenmaske wird wieder die Modenkombination hergestellt. Der Auskoppelspiegel 1 mit Schlitz 6 und Phasenmasken 9 ist zusätzlich in Aufsicht gezeichnet. Die Bereiche, in denen die Phase um $\pi$ verzögert werden muss, sind schraffiert. Etwa in der Mitte des langen Resonatorarms ist die Intensität der Modenkombination nahe der optischen Achse konzentriert. Dort ist der räumliche Überlapp 82% mit einem Gaußstrahl mit angepasstem q-Parameter, für den eine Hälfte des Strahlprofils mit einer Phasenmaske gegen die andere in ihrer Phase um $\pi$ verschoben ist. Die kleinen Bilder zeigen die Intensitätsverteilung in der transversalen Richtung senkrecht zur Zeichenebene an ausgewählten Orten.

Figur 5a zeigt das Stabilitätsdiagramm eines linearen 2-Spiegel-Resonators, dargestellt als Funktion der g-Parameter $g_1$ = 1 - $L/R_{K,1}$ $g_2$ = 1 - $L/R_{K,2}$. Der stabile Bereich 0 < $g_1 g_2$ < 1 ist schraffiert. Die Ränder des Stabilitätsbereichs sind bis auf den konfokalen Punkt nicht stabil. Der symmetrische Fall $R_{K,1}$ = $R_{K,2}$ mit dem konzentrischen, konfokalen und plan-plan-Resonator ist als diagonale Linie eingezeichnet. Eine Quasiabbildung mit $\psi$ = 1/2$\pi$ (1. Quadrant) bzw. $\psi$ = 3/2$\pi$ (3.Quadrant) liegt auf der gestrichelten Linie vor. Während der abbildende konfokale Fall ein ausgezeichneter Punkt auf dem Stabilitätsrand ist, liegt eine Quasiabbildung mitten im Stabilitätsbereich. Um den Zustand zu erreichen, muss die Resonatorlänge *L* exakt eingestellt werden. Quasiabbildungen mit anderen Gouy-Phasen werden ebenfalls durch Hyperbeln im g-Parameter-Diagramm beschrieben.

Figur 5b zeigt den Stabilitätsbereich des Ringresonators aus Figur 3. Die Gouy-Phase läuft von $\pi$ bis 2$\pi$. An den Stabilitätsrändern divergiert der Eigen-q-Parameter. In der Mitte des Stabilitätsbereichs liegt eine Quasiabbildung mit $\psi$ = 3/2$\pi$ vor. Eine gleichzeitige Resonanz von verschiedenen transversalen Moden liegt abhängig von der Finesse nur für einen Bruchteil des Stabilitätsbereichs $d_2$ - $d_1$ vor.

Für eine Quasiabbildung mit der Gouy-Phase pro Resonatorumlauf $\psi$ = 3/2$\pi$ reproduziert sich die Feldverteilung des einen Fokussierspiegels näherungsweise auf dem anderen Fokussierspiegel, so dass ein Resonator mit zwei Schlitzen in den beiden Fokussierspiegeln realisiert werden kann. Die zwischen den Fokussierspiegeln aufgesammelte Gouy-Phase ist allerdings nicht exakt $\pi$, sondern abhängig von der Rayleighlänge und dem Abstand der Spiegel etwas kleiner. Für einen Ringresonator mit zwei Fokussierspiegeln mit Krümmungsradius $R_K$ und Resonatorlänge *L* ist bei Einstellung

$$\Delta\psi = \pi - 2\arctan\left(\frac{L}{R_K} + \frac{\sqrt{L^2 - 4R_K L + 2R_K^2}}{R_K} - 1\right) \approx \frac{R_K}{L}.$$

der Quasiabbildung diese Differenz                                                                                      Aufgrund dieser Phasendifferenz ergeben sich Verluste an den Schlitzen, die folgendermaßen abgeschätzt werden können. Die

$$T(a,\psi) = \int_\Omega |u(\xi,\psi)|^2 d\xi$$

Leistungsverluste durch Beschneidung des Felds am Schlitz sind                                          in Abhängigkeit der halben Schlitzbreite *a* und der Phase zwischen den beiden beteiligten Moden $\psi$ Das Integrationsgebiet $\Omega$ spart den Schlitz aus. Der Überlapp des beschnittenen Felds mit dem ursprünglichen ist noch einmal *T*, so dass die gesamten Verluste an einem Schlitz durch $T^2(a, \psi)$ gegeben sind. Die Verluste sind minimal, wenn an beiden Schlitzen die gleiche Abweichung gegen den Fall mit verschwindender Intensität auf der Achse ($\psi$ = 0) vorliegt. Es sind also die Verluste bei beiden Schlitzen jeweils $T^2(a, \Delta\psi/2)$. Die Verluste für kleine $\psi$ und *a* können geschrieben werden als

$$T^2(a,\psi) = 1 - c\frac{a}{w}\psi^2.$$      Für      die      Modenkombination      $\sqrt{3/11}\, GH_{0,0} - \sqrt{8/11}\, GH_{4,0}$      ist

$$c = \frac{192}{11}\sqrt{\frac{2}{\pi}} = 14.$$

Mit $R_K$ = 150 mm, $L$ = 3850 mm und $a/w$ = 0,1 ist $\Delta\psi$ = 0,04 und damit

$$T^2(a,\Delta\psi/2) = 1 - 14\frac{a}{w}\left(\frac{\Delta\psi}{2}\right)^2 = 0,99944.$$

Mit den Verlusten an beiden Blenden $T^4 = 0.99888$ ist die maximal erreichbare Überhöhung $P = 900$, wobei dieser Wert noch mit dem räumlichen Überlapp bei der Einkopplung multipliziert werden muss.

Von entscheidender Bedeutung für die experimentelle Realisierung eines Resonators mit Hindernis auf der optischen Achse durch eine Quasiabbildung ist die Frage, wie genau die Gouy-Phase und damit die geometrischen Abstände der optischen Elemente eingestellt werden müssen. Die erforderliche Genauigkeit steigt mit der Finesse des Resonators. Wenn mehrere Gauß-Hermite-Moden, die sich unabhängig voneinander im Resonator ausbreiten, gleichzeitig überhöht werden sollen, muss der Phasenunterschied $\Delta n \cdot \delta\psi$, der durch die Modenzahldifferenz $\Delta n$ und die Verstimmung gegen die Quasiabbildung $\delta\psi$ gegeben ist, kleiner als die Breite der Resonanzkurve sein, die durch die Finesse

des Resonators $F = \dfrac{2\pi}{1 - RR_1}$ bestimmt ist. Die Resonanzkurve für eine Gauß-Hermite-Mode ist mit der Reflektivität

des Einkoppelspiegels $R_1$ und den Resonatorverlusten $R$ gegeben durch $P(\phi) = \dfrac{1 - R_1}{1 + RR_1 - 2\sqrt{RR_1}\cos(\phi)}.$ Die

Breite dieser Kurve ist $\Delta\phi = \dfrac{2\pi}{F}.$

Im Folgenden soll der Begriff Resonanzkurve die Überhöhung $P$ als Funktion der Umlaufphase $\phi$ bezeichnen. Diese Phase wird über die Resonatorlänge $L$ gemäß $\phi = kL$ mit der Wellenzahl $k$ eingestellt, die bei großer Finesse auf Bruchteile eines Nanometers kontrolliert werden muss. Das ist durch eine aktive Regelung der Resonatorlänge möglich. Um sie davon zu unterscheiden soll die Überhöhung als Funktion der Verstimmung $\delta\psi$ gegen die Quasiabbildung als Verstimmungskurve bezeichnet werden, wobei beim Durchlaufen der Verstimmungskurve an jedem Punkt das Erreichen der Resonanz durch Einstellen der Resonatorlänge vorausgesetzt ist. Die Breite dieser Verstimmungskurve als Funktion der einzustellenden Abstände von optischen Elementen ist um Größenordnungen größer als für die Resonanzkurve als Funktion der Resonatorlänge. Für typische Überhöhungsresonatoren hoher Finesse wie in Tabelle 1 liegt sie im Bereich von Mikrometern. Damit ist ein aktives Locken auf die Gouy-Phase nicht erforderlich, sondern die Einstellung kann manuell erfolgen. Für den in Figur 3 gezeigten Ringresonator ist die Verstimmung der Gouy-Phase gegen die Quasiabbildung mit $\psi = 3/2\pi$ gegeben durch eine Verstimmung des

Abstands $\delta$ der Fokussierspiegel mit $\delta\psi = \dfrac{2}{R_k^2}\sqrt{L^2 - 4R_kL + 2R_k^2}\,\delta.$ Für die in Tabelle 1 angegebenen Parameter ist $\delta\psi = 0,315\ \delta/mm.$

| | |
|---|---|
| Repetitionsrate $v_{rep}$ | 78 MHz |
| Wellenlänge $\lambda$ | 1042 nm |
| Pulsdauer $\tau$ | 200 fs |
| Resonatorlänge $L = c/v_{rep}$ | 3850 mm |
| Krümmungsradius der Fokussierspiegel $R_K$ | 150 mm |
| Fokusradius $w_0$ | 22 $\mu$m |
| Strahlradius auf den Fokussierspiegeln $w_1$ | 1,11 mm |
| Sphärische Aberration $\Delta\phi_w$ | 0,678 mrad |
| Reflektivität des Einkopplers $R_1$ | 0,9986 |
| Resonatorverluste $R$ | 0,99953 |
| Finesse des Resonators ohne Hindernis $F$ | 3400 |

Tabelle 1. Typische Parameter für einen fs-Überhöhungsresonator zur Erzeugung hoher Harmonischer. Der Resonator ist ein Ringresonator wie in Figur 3.

Wenn es in einem Resonator nur Verluste $r$ gibt, die gleichmäßig auf die Amplitude des elektrischen Felds wirken (wie der Reflexionskoeffizient eines Spiegels), so laufen die transversalen Moden unabhängig voneinander im Resonator um. Ein auf den Resonator einfallender Lichtstrahl wird auf das orthogonale Funktionensystem der Resonatormoden projiziert, die je nach Umlaufphase $\phi$ unterschiedlich stark überhöht werden. Diese Situation liegt z.B. vor, wenn ein Bild in einem entarteten Resonator überhöht werden soll. Wenn in einem solchen Resonator zwei Gauß-Hermite-Moden mit Modenzahldifferenz $\Delta n$, deren Resonanzen durch eine Verstimmung $\delta\psi$ gegen die Quasiabbildung gegeneinander verschoben sind, gleichermaßen überhöht werden sollen, müssen beide um die halbe Phasendifferenz $\Delta n \cdot \delta\psi/2$ aus ihrer Resonanz verschoben werden. Die Überhöhung dieser Modenkombination ist dann als

$$P(\delta\psi) = U \frac{1 - R_1}{1 + RR_1 - 2\sqrt{RR_1}\cos(\Delta n/2 \cdot \delta\psi)}$$

Funktion der Verstimmung mit dem räumlichen Überlapp $U$ zwischen Einkoppelstrahl und zirkulierendem Feld. Die Breite dieser Verstimmungskurve ist gegeben durch

$$\Delta\psi = \frac{2}{\Delta n}\frac{2\pi}{F}.$$

Bei einer Finesse von $F = 3000$ und $\Delta n = 4$ ist $\Delta\psi = 1$ mrad und die Breite der Verstimmungskurve $\Delta\delta = 3$ mm$\cdot\Delta\psi = 3$ µm.

Wenn ein Hindernis in den Resonator eingeführt wird, ist diese Betrachtung nicht mehr zulässig, da die Resonatormoden durch das Hindernis aneinander gekoppelt werden. Das führt dazu, dass die Verstimmungskurve breiter wird. Die Projektion einer Gauß-Hermite-Mode auf eine andere ist nicht mehr null, wenn ein Teil des Integrationsgebiets durch ein Hindernis auf null gesetzt wird. Mit dieser Überlegung kann die Verstimmungskurve $P(\delta\psi)$ modelliert werden.

Dies soll am Beispiel der Quasiabbildung mit $\psi = 3/2\pi$ und der Modenkombination $GH_{0,0} + GH_{4,0} + GH_{8,0}$ diskutiert werden. Die zirkulierende Feldverteilung wird beschrieben durch die komplexen Koeffizienten $c_0$, $c_4$, $c_8$ für die normierten Gauß-Hermite-Moden $u_0$, $u_4$, $u_8$, die sich nahe der Resonanz befinden. Die Moden $u_1$, $u_2$, $u_3$ und $u_5$, $u_6$, $u_7$,... sind nicht resonant und können deshalb vernachlässigt werden. Höhere resonante Moden $u_{12}$, $u_{16}$.... werden durch Blenden von außen unterdrückt und deshalb nicht berücksichtigt. Die Indizes beziehen sich dabei nur auf die transversale Richtung, in der die Quasiabbildung vorliegt, und in der die Blenden wirken. In der dazu senkrechten Richtung werden ein Grundmode und keine Blenden angenommen. Durch Blenden werden die Moden aneinander gekoppelt. Diese Kopplung wird

$$t_{k,l} = 2\int_a^{A_B} u_k(x) \cdot u_l^*(x)\,dx$$

durch eine Matrix $T$ beschrieben, deren Elemente die Überlappintegrale zwischen den Gauß-Hermite-Moden unter Berücksichtigung der Blenden sind. Dabei bezeichnet $a$ die halbe Breite des Schlitzes auf der optischen Achse und $A_B$ den Radius einer weiteren Blende, die die Feldverteilung von außen einschränkt (siehe Figur 6).

Figur 6 zeigt hierbei die Intensitätsverteilung auf dem Auskoppelspiegel mit Schlitz der Breite $2a$ auf der optischen Achse. Im Abstand $A_B$ zu beiden Seiten der optischen Achse befinden sich Blenden 10, die die Feldverteilung von außen einschränken. Gezeigt ist die Schlitzmode $GH_{0,0} + GH_{4,0}$ bei Quasiabbildung in x-Richtung. Der Abstand der Lobes von der optischen Achse für diese einfache Schlitzmode ist $x = \sqrt{1/2}\,w$ und $x = \sqrt{3}\,w$. Die Schlitzbreite im Bild ist $2a = 0,1\cdot 2w$, der Abstand der Blenden $A_B = 3\cdot w$

$T$ ist reell und symmetrisch für Gauß-Hermite-Moden zum selben q-Parameter. Da die betrachteten Moden gerade Funktionen sind, genügt es, das halbe Integrationsintervall zu betrachten. Aufgrund der Orthonormalität der Gauß-Hermite-Moden ist die Matrix $T$ für verschwindende Blenden die Einheitsmatrix. Bei Vorhandensein von Blenden sind die Beträge der Diagonaleinträge durch das Beschneiden des Felds kleiner eins und die Nichtdiagonalelemente von null verschieden. Durch diese Kopplung kann ein Leistungstransfer zwischen den Moden bewirkt werden, wie er erforderlich ist, wenn z.B. der Einkoppelstrahl $u_{in}$ nur mit der Grundmode $u_0$ überlappt, das zirkulierende Feld sich aber aus $u_0$ und $u_4$ zusammensetzt, um die Verluste am Schlitz auf der optischen Achse zu minimieren. Die Moden sammeln bei einem Umlauf bei Verstimmung gegen die Quasiabbildung $\delta\psi$ gemäß ihrer Modenzahl eine unterschiedliche Phase auf, die durch die Matrix $\Psi$ beschrieben wird. Dabei ist $\Psi_{k,k} = \exp(ik\delta\psi)$. Die Koeffizienten $c_0$, $c_4$, $c_8$, die die zirkulierende Feldverteilung beschreiben, können bestimmt werden aus der Bedingung, dass die Summe aus den durch einen Umlauf transformierten Koeffizienten und der Einkopplung wieder die Koeffizienten ergeben muss:

$$r_1 \begin{bmatrix} t_{0,0} & t_{0,4} & t_{0,8} \\ t_{4,0} & t_{4,4} & t_{4,8} \\ t_{8,0} & t_{8,4} & t_{8,8} \end{bmatrix} re^{i\phi} \begin{bmatrix} 1 & 0 & 0 \\ 0 & e^{i4\delta\psi} & 0 \\ 0 & 0 & e^{i8\delta\psi} \end{bmatrix} \begin{bmatrix} c_0 \\ c_4 \\ c_8 \end{bmatrix} + i\sqrt{1-r_1^2} \begin{bmatrix} b_0 \\ b_4 \\ b_8 \end{bmatrix} = \begin{bmatrix} c_0 \\ c_4 \\ c_8 \end{bmatrix} .$$

Diese Gleichung kann in der Form $M\cdot\vec{c} = \vec{b}$ geschrieben und numerisch gelöst werden. Der Umlauf wird beschrieben durch die Kopplung der Moden am Schlitz $T$, der durch die Verstimmung aufgeprägten Phase $\psi$, den weiteren Amplitudenverlusten $r$ und der Reflexion am Einkoppelspiegel mit Reflexionskoeffizient $r_1$. Die Einkopplung ist gegeben

$$b_k = \int_{-\infty}^{\infty} u_k(x) \cdot u_{in}^*(x) dx$$

durch den Überlapp des Einkoppelstrahls mit den Moden und die Transmission durch den Einkoppelspiegel mit dem Transmissionskoeffizienten $t_1 = \sqrt{1-r_1^2}$. Die Phase $\phi$ wird so gewählt, dass die Überhöhung $P$ maximal ist. Die Überhöhung ist gegeben durch die Summe der Betragsquadrate der Koeffizienten:

$$P = P_c/P_{in} = \sum_k |c_k|^2 .$$

Diese Herleitung ist analog zur Herleitung der Resonanzkurve, die für eine einzelne Resonatormode gilt, die durch nur einen Koeffizienten, die zirkulierende Feldstärke $E_c$, beschrieben wird. Aus der Bedingung, dass sich das zirkulierende Feld im stationären Fall nach einem Umlauf reproduziert, kann die Überhöhung abgeleitet werden.

Das Feld wird durch eine Entwicklung nach Gauß-Hermite-Moden beschrieben, da nur für diese Moden die Guoy-Phase als bei der Propagation zusätzlich auf der Achse aufgesammelte Phase definiert ist.

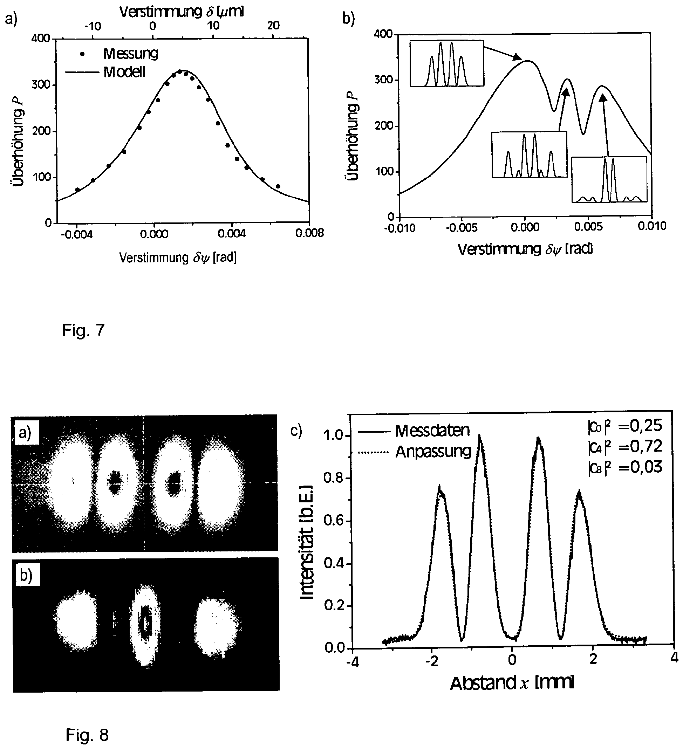

Figur 7 zeigt die Überhöhung als Funktion der Verstimmung gegen die Quasiabbildung. In Figur 7a sind hierbei Messdaten (Punkte) und Modell (Linie) für die Verstimmungskurve dargestellt. Die Parameter sind die in Tabelle 1 aufgelisteten. Der Schlitz ist durch einen Draht auf der optischen Achse realisiert mit dem Verhältnis von Schlitzbreite zu Strahldurchmesser $2a/2w = 0,051$. Eine Blende, die die Feldverteilung von außen beschneidet, hat den Abstand $A_B/w = 2,9$ von der optischen Achse. Die Einkopplung erfolgt mit der Grundmode zum Eigen-q-Parameter des Resonators. Die Finesse des Resonators ist am Maximum der Verstimmungskurve $F = 3000$, was nur einen geringen Abfall gegenüber der Finesse des Resonators ohne Draht von $F = 3360$ darstellt. Dass die Überhöhung nur $P = 330$ beträgt, gegenüber $P = 1400$ für die Grundmode ohne Draht, ist im räumlichen Überlapp der zirkulierenden Feldverteilung mit dem einfallenden Gaußstrahl von ca. 3/11 begründet, der durch Anpassung des einfallenden Strahls verbessert werden kann. Die zirkulierende Leistung beträgt 450 W. Das volle Spektrum des einfallenden Strahls ist im Resonator überhöht, so dass die zirkulierende Pulslänge 200 fs beträgt.

Figur 7b zeigt die berechnete Verstimmungskurve bei Abwesenheit einer Blende, die die Feldverteilung von außen einschränkt, und mit Berücksichtigung der sphärischen Aberration. Die Parameter sind die in Tabelle 1 aufgelisteten. Die Schlitzbreite ist $2a/2w = 0,1$. Hier wurden die Moden $u_0$, $u_4$, $u_8$, $u_{12}$ berücksichtigt. Die kleinen Bilder zeigen die Intensitätsverteilung an den drei Maxima der Verstimmungskurve.

Figur 8 zeigt die gemessene Intensitätsverteilung des überhöhten Felds am Ort der Blende auf der optischen Achse (realisiert durch einen Draht) in Teilabbildung 8a und am Ort der maximalen Intensität auf der optischen Achse in Teilabbildung 8b. Teilabbildung 8c zeigt eine Anpassung der Modenkombination $u_0$, $u_4$, $u_8$ an einen Schnitt der Intensitätsverteilung aus Teilabbildung 8a. Die Beiträge der drei Gauß-Hermite-Moden sind angegeben.

Auch der Einfluss der sphärischen Aberration auf den gekrümmten Spiegeln kann in diesem Modell berücksichtigt werden. Die Differenz zwischen einer sphärischen und einer idealen parabolischen Phase sei $\Delta\phi(x)$. Dieser Phasenfehler führt zu einer Kopplung der Moden, die durch eine Matrix S beschrieben werden kann, mit den Einträgen

$$s_{kJ} = 2\int_0^{\infty} u_k(x) \cdot \exp(i\Delta\phi(x)) \cdot u_l^*(x) dx, \quad \Delta\phi(x) = -2\frac{1}{8}\frac{k}{R_K^3} x^4 .$$

Der Einfluss der sphärischen Aberration kann quantifiziert werden durch die Größe $\Delta\phi_w = \frac{1}{4}\frac{k}{R_K^3} w_1^4$. Mit

dem Krümmungsradius $R_K \approx 2w_0\sqrt{\frac{\pi}{\lambda}}\sqrt{L}$ und dem Strahlradius auf den gekrümmten Spiegeln $w_1^4 \approx \frac{\lambda^2 L^2}{\pi^2}$ folgt

$$\Delta\phi_w \approx \frac{1}{16}\left(\frac{\lambda}{\pi}\right)^{\frac{5}{2}}\frac{\sqrt{L}}{w_0^3}\,.$$

$\Delta\phi_w$ hängt also in erster Näherung wurzelförmig von der Resonatorlänge L und reziprok kubisch vom Fokusradius $w_0$ ab.

Für kleine $\Delta\phi_W$ ergibt die sphärische Aberration in erster Näherung eine zusätzliche Phase für die höheren transversalen Moden. Die Beträge der Nichtdiagonalelemente von $S$ sind klein und die Diagonalelemente betraglich ungefähr 1. Das führt dazu, dass nicht alle beteiligten Moden bei der gleichen Verstimmung $\delta\psi$ exakt resonant sind und die Verstimmungskurve mehrere Maxima aufweist, bei denen unterschiedliche Moden gleichzeitig resonant sind (siehe Figur 7b). Die Phase, die die Moden durch die sphärische Aberration zusätzlich aufsammeln, ist gegeben durch $\arg(s_{0,0})$ = $-0,2\cdot\Delta\phi_w$, $\arg(s_{4,4})$ = $-7,7\cdot\Delta\phi_w$, $\arg(s_{8,8})$ = $-27,2\cdot\Delta\phi_w$. Wenn der Beitrag höherer transversaler Moden nicht erwünscht ist, kann er durch Blenden unterdrückt werden, die die Feldverteilung von außen beschneiden.

Bei größerer Aberration ($\Delta\phi_W$ > 1 mrad für eine Finesse von ~3000) macht sich auch die Abweichung des Betrags der Diagonalelemente der Matrix von 1 bemerkbar, die zusätzliche Verluste bewirkt. Diese Beträge sind in erster Näherung $\left|s_{0,0}\right| = 1 - 0,2\cdot\Delta\phi_w^2$, $\left|s_{4,4}\right| = 1 - 36\cdot\Delta\phi_w^2$ und $\left|s_{8,8}\right| = 1 - 378\cdot\Delta\phi_w^2$. Wie aufgrund der größeren transversalen Ausdehnung erwartet, sind die Verluste für die $GH_{4,0}$-Mode deutlich größer als für die Grundmode. Der Faktor beträgt 180. Die Limitierung der Finesse durch die sphärische Aberration ist für eine Schlitzmode folglich deutlich kritischer als für den Betrieb in der Grundmode.

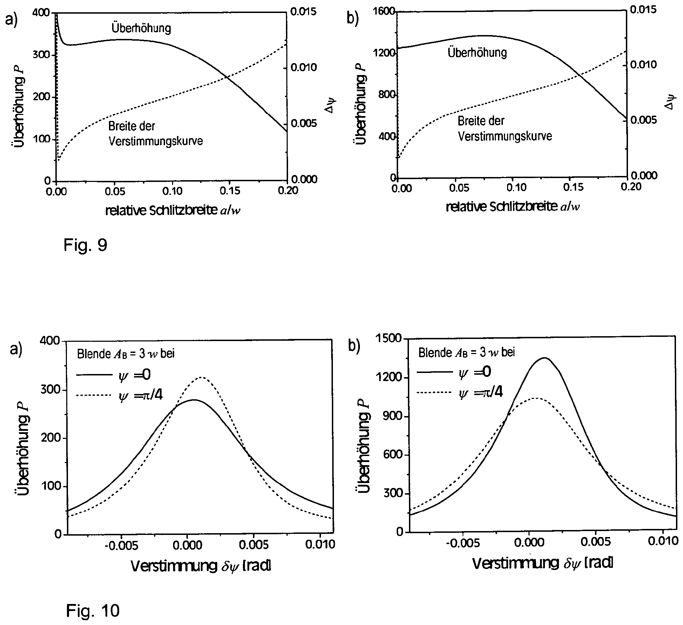

Mit zunehmender Breite des Hindernisses auf der optischen Achse werden die Verluste für die Moden größer, was zu einem Abfall der Überhöhung führt. Eine zunehmende Breite bewirkt aber auch eine zunehmende Kopplung der Moden untereinander und damit eine breitere Verstimmungskurve. Wenn die sphärische Aberration berücksichtigt wird, d.h. die Moden $u_0$, $u_4$, $u_8$ nicht gleichzeitig resonant sein können, zeigt die Überhöhung sogar ein Maximum bei einer endlichen Schlitzbreite auf. Figur 9 zeigt die berechnete Überhöhung $P$ und die Breite $\Delta\psi$ (FWHM) der Verstimmungskurve als Funktion der Schlitzbreite $2a$ bezogen auf den Strahldurchmesser $2w$ mit den Parametern aus Tabelle 1. In Teilabbildung 9a ist der Einkoppelstrahl die Grundmode zum Eigen-q-Parameter ($b_0$ = 1), in Teilabbildung 9b ist der Einkoppelstrahl gleich der zirkulierenden Schlitzmode $\left(b_0 = \sqrt{3/11},\ b_4 = -\sqrt{8/11}\right)$. Für $a$ = 0 hängt die Überhöhung nicht von der Guoy-Phase ab. Mit steigender Schlitzbreite nimmt die Breite der Verstimmungskurve zu. Die Überhöhung zeigt ein Maximum bei einer endlichen Schlitzbreite auf. Dieses Verhalten tritt nur auf, wenn die sphärische Aberration berücksichtigt wird. Für die Parameter aus Tabelle 1 kann daher die Schlitzbreite etwa 1/10 des Strahldurchmessers betragen, ohne dass die Überhöhung einbricht. Diese Breite ist deutlich größer als für die $GH_{1,0}$-Mode möglich wäre, oder der Lochdurchmesser für die Grundmode betragen dürfte, um die gleiche Überhöhung zu erreichen.

Blenden, die die Feldverteilung von außen beschneiden, können den Beitrag von höheren transversalen Moden unterdrücken. Der Einfluss dieser Blenden auf die Überhöhung hängt neben dem Blendenradius $A_B$ bezogen auf den Strahlradius auch von der Position der Blende entlang der Propagationsrichtung ab. Eine Verschiebung der Blende gegen den Ort des Hindernisses auf der optischen Achse um die Gouy-Phase $\psi$ wird beschrieben durch

$$r_1 r e^{i\phi}\,\Psi(\psi)\cdot T_{A_B}\cdot\Psi(-\psi)\cdot S\cdot T_a\cdot S\cdot\Psi(\delta\psi)\vec{c} + i\sqrt{1-r_1^2}\ \vec{b} = \vec{c}\ .$$

Eine Rechnung ergibt die in Figur 10 dargestellten Verstimmungskurven für einen Ringresonator mit den Parametern aus Tabelle 1 mit einem Schlitz mit Breite $2a/2w$ = 0,1 auf der optischen Achse und einer weiteren Blende mit Abstand $A_B/w$ = 3 von der Achse am Ort des Schlitzes (durchgezogene Linie) und am Ort maximaler Intensität auf der Achse (gestrichelte Linie), d.h. um die Gouy-Phase $\psi$ = $\pi/4$ verschoben. In Teilabbildung 10a) ist der Einkoppelstrahl die Grundmode zum Eigen-q-Parameter ($b_0$ = 1), in Teilabbildung 10b) ist der Einkoppelstrahl gleich der zirkulierenden Schlitzmode $\left(b_0 = \sqrt{3/11},\ b_4 = -\sqrt{8/11}\right)$. Die Überhöhung für den Fall, dass die Blende am Ort des Hindernisses auf der optischen Achse ($\psi$ = 0) steht, und den Fall, dass sie sich am Ort maximaler Intensität auf der Achse ($\psi$ = $\pi/4$) befindet, unterscheiden sich deutlich. Welcher Ort günstiger ist, hängt von der Einkopplung ab. Für die Einkopplung mit der Grundmode zum Eigen-q-Parameter erlaubt der Ort maximaler Intensität auf der Achse eine größere Überhöhung, für die Einkopplung mit der Schlitzmode ist die Überhöhung größer, wenn die Blende am Ort des Hindernisses steht.

Der vorgeschlagene optische Resonator weist einen direkten geometrischen Zugang auf der optischen Achse auf, der zu geringen Verlusten im Resonator führt. Ein direkter geometrischer Zugang zur optischen Achse hat gegenüber anderen Möglichkeiten der Ein- oder Auskopplung von Strahlung, insbesondere von höheren Harmonischen wie bspw.

XUV-Strahlung, den Vorteil, dass keine Dispersion oder Nichtlinearität eingeführt werden und der Resonator damit zu großen zirkulierenden mittleren und Pulsspitzenleistungen skalierbar ist. Die genutzte Quasiabbildung erlaubt den geometrischen Zugang auf der optischen Achse des Resonators mit kleinen Verlusten an einem Loch oder Schlitz oder einem reflektierenden Ein- oder Auskoppelelement. Es kann eine zirkulierende Feldverteilung angeregt werden, die einen Ort maximaler Intensität auf der optischen Achse besitzt und sich damit bspw. zur Erzeugung hoher Harmonischer eignet. Die Quasiabbildung kann in jedem stabilen Resonator eingestellt werden und ist somit auf einfache Weise zu realisieren. Wenn ein Ringresonator mit zwei gekrümmten Spiegeln eingesetzt wird, kann die Quasiabbildung leicht eingestellt werden, da sie nur von einem Parameter, dem Abstand der gekrümmten Spiegel bei konstanter Resonatorlänge, abhängt. Diese Konfiguration konnte experimentell mit einer Finesse >3000 realisiert werden. Der Abstand der gekrümmten Spiegel muss hierbei nur auf einige $\mu$m genau eingestellt werden, so dass die Einstellung manuell erfolgen kann.

Die Entartung von transversalen Moden in einem Resonator mit Quasiabbildung ermöglicht zusammen mit geeigneten Blenden, Modenkombinationen mit großen Intensitätsgradienten und scharf lokalisierten Intensitätsmaxima oder -minima gezielt anzuregen. Gegenüber einfachen transversalen Moden, die ebenfalls stärkere Intensitätsgradienten aufweisen als die Grundmode, ändern diese Modenkombinationen bei der Propagation ihre Gestalt. Die Intensität auf der Achse oszilliert bspw. bei Kombination von zwei Gauß-Laguerre-Moden, so dass im Fokus ein Intensitätsmaximum oder -minimum gebildet wird, das sowohl in radialer wie in axialer Richtung stark lokalisiert ist. Solche Feldverteilungen können bspw. als Dipolfallen für neutrale Atome dienen.

Bezugszeichenliste

| 1 | erster Fokussierspiegel (Auskoppelspiegel) |
| 2 | zweiter Fokussierspiegel |
| 3 | Planspiegel |
| 4 | Planspiegel |
| 5 | Fokus |
| 6 | Schlitz |
| 7 | weiterer Planspiegel |
| 8 | weiterer Planspiegel |
| 9 | Phasenmaske |
| 10 | Blende |

**Patentansprüche**

1. Optischer Überhöhungsresonator für nichtlineare Prozesse, der als passiver Resonator aus mehreren Spiegeln (1-4, 7, 8) ausgebildet ist, durch die eine optische Achse festgelegt ist,
   der mindestens ein Hindernis auf der optischen Achse in Form einer Durchgangsöffnung (6) in einem (1) der Spiegel (1-4, 7, 8) oder eines Ein- oder Auskoppelelements aufweist,
   wobei die Spiegel (1-4, 7, 8) so ausgewählt und angeordnet sind,

   - dass der Resonator stabil ist und
   - ohne das Hindernis erste transversale Eigenmoden besitzt, die zu einer Gruppe von Eigenmoden mit gleicher Resonanzfrequenz gehören,

   wobei in dem Resonator mindestens drei dieser Gruppen mit unterschiedlicher Resonanzfrequenz existieren und durch das Hindernis durch Kombination der ersten transversalen Eigenmoden einer Resonanzfrequenz neue Eigenmoden entstehen, die am Ort des Hindernisses ein Intensitätsminimum aufweisen,
   **dadurch gekennzeichnet,**
   **dass** die Spiegel (1-4, 7, 8) einen Ringresonator bilden, dessen optische Achse in einer Ebene liegt und der zwei gekrümmte Spiegel (1,2) aufweist.

2. Optischer Überhöhungsresonator nach Anspruch 1,
   **dadurch gekennzeichnet,**
   **dass** die Spiegel (1-4, 7, 8) so angeordnet sind, dass eine Modenkombination aus der Grundmode mit der nächsten resonanten transversalen ersten Eigenmode des Resonators, die eine gerade Symmetrie bezüglich der optischen Achse aufweist, ohne das Hindernis erreicht wird.

3. Optischer Uberhöhungsresonator nach Anspruch 1,

**dadurch gekennzeichnet,**
**dass** die Durchgangsöffnung (6) als Schlitz ausgebildet ist, der sich in der Ebene der optischen Achse erstreckt, wobei eine Entartung der transversalen ersten Eigenmoden in einer Richtung senkrecht zur Ebene der optischen Achse eingestellt ist.

4. Optischer Überhöhungsresonator nach Anspruch 1 oder 3,
   **dadurch gekennzeichnet,**
   **dass** die Durchgangsöffnung (6) in einem der gekrümmten Spiegel (1) ausgebildet ist.

5. Optischer Uberhöhungsresonator nach einem der Ansprüche 1 bis 4,
   **dadurch gekennzeichnet,**
   **dass** auf einem ersten (1) und einem zweiten (7) der Spiegel (1-4, 7, 8) Phasenmasken (9) aufgebracht sind, wobei sich der zweite Spiegel (7) mit Phasenmaske (9) am Ort einer Abbildung des ersten Spiegels (1) mit Phasenmaske (9) befindet.

6. Optischer Uberhöhungsresonator nach Anspruch 4,
   **dadurch gekennzeichnet,**
   **dass** auf einem ersten (1) und einem zweiten (7) der Spiegel (1-4, 7, 8) Phasenmasken (9) aufgebracht sind, wobei sich der zweite Spiegel (7) mit Phasenmaske (9) am Ort einer Abbildung des ersten Spiegels (1) mit Phasenmaske (9) befindet,
   der erste Spiegel (1) mit Phasenmaske (9) der gekrümmte Spiegel mit schlitzförmiger Durchgangsöffnung (6) ist, eine Modenzahldifferenz einer Entartung in der transversalen Richtung senkrecht zur Ebene des Strahlengangs $\Delta n$ = 4 beträgt,
   und eine Modenkombination aus den Gauß-Hermite-Moden $GH_{1,0}$ und $GH_{5,0}$ angeregt wird, die am Ort des gekrümmten Spiegels mit Durchgangsöffnung (6) vier Strahlungskeulen aufweist, die jeweils gegenphasig schwingen und durch die Phasenmaske (9) gleichphasig gesetzt werden, so dass an der Strahltaille zwischen den beiden gekrümmten Spiegeln (1, 2) die Intensität auf der optischen Achse maximal ist.

7. Optischer Uberhöhungsresonator nach Anspruch 5 oder 6,
   **dadurch gekennzeichnet,**
   **dass** der Ringresonator zusätzlich zu den gekrümmten Spiegeln (1, 2) und dem zweiten Spiegel (7) mit Phasenmaske (9) mindestens drei weitere Spiegel (3, 4, 8) umfasst.

**Claims**

1. Optical enhancement resonator for nonlinear processes formed as a passive resonator of multiple mirrors (1-4, 7, 8), by means of which an optical axis is specified, which has at least one obstacle on the optical axis in the form of a through-opening (6) in one (1) of the mirrors (1-4, 7, 8) or of an incoupling or outcoupling element, wherein the mirrors (1-4, 7, 8) are selected and arranged such that

   - the resonator is stable and
   - without the obstacle has first transverse eigenmodes which belong to a group of eigenmodes with the same resonant frequency,

   wherein at least three of these groups exist in the resonator with a different resonance frequency, and by means of the obstacle by combination of the first transverse eigenmodes of a resonance frequency new eigenmodes are produced which have an intensity minimum at the position of the obstacle, **characterized in that** the mirrors (1-4, 7, 8) form a ring resonator, the optical axis of which lies in a plane and which has two curved mirrors (1, 2).

2. The optical enhancement resonator according to Claim 1, **characterized in that** the mirrors (1-4, 7, 8) are arranged in such a way that a mode combination is obtained from the fundamental mode with the nearest resonant transverse first even eigenmode of the resonator, which eigenmode has an even symmetry with respect to the optical axis, without the obstacle.

3. The optical enhancement resonator according to Claim 1, **characterized in that**

the through-opening (6) is implemented as a slot which extends in the plane of the optical axis, wherein a decomposition of the transverse first eigenmodes is set in a direction perpendicular to the plane of the optical axis.

4. The optical enhancement resonator according to Claim 1 or 3, **characterized in that** the through-opening (6) is formed in one of the curved mirrors (1).

5. The optical enhancement resonator according to any one of Claims 1 to 4,
**characterized in that**
on a first (1) and a second (7) of the mirrors (1-4, 7, 8), phase masks (9) are applied, wherein the second mirror (7) with phase mask (9) is located at the position of an image of the first mirror (1) with phase mask (9).

6. The optical enhancement resonator according to Claim 4, **characterized in that**
on a first (1) and a second (7) of the mirrors (1-4, 7, 8) phase masks (9) are applied,
wherein the second mirror (7) with phase mask (9) is located at the position of an image of the first mirror (1) with phase mask (9),
the first mirror (1) with phase mask (9) is the curved mirror with a slot-shaped through-opening (6),
a mode number difference of a decomposition in the transverse direction perpendicular to the plane of the beam path has the value $\Delta n = 4$,
and a mode combination of the Gauss-Hermite modes $GH_{1,0}$ and $GH_{5,0}$ is excited, which has four beam lobes at the position of the curved mirror with through-opening (6), each of which oscillates in antiphase and
is set in phase by means of the phase mask (9), so that at the beam waist between the two curved mirrors (1, 2) the intensity on the optical axis is a maximum.

7. The optical enhancement resonator according to Claim 5 or 6, **characterized in that**
the ring resonator, in addition to the curved mirrors (1, 2) and the second mirror (7) with phase mask (9), comprises at least three further mirrors (3, 4, 8).

**Revendications**

1. Résonateur à enrichissement optique pour processus non linéaires, qui est conçu comme un résonateur passif composé de plusieurs miroirs (1-4, 7, 8), à travers lesquels un axe optique est défini, qui présente au moins un obstacle sur l'axe optique sous la forme d'une ouverture traversante (6) dans l'un (1) du miroir (1-4, 7, 8) ou d'un élément de couplage d'entrée ou de sortie, dans les miroirs (1-4, 7, 8) sont choisis et agencés de manière à ce que

   - le résonateur soit stable et
   - sans que l'obstacle ait des premiers modes propres transversaux qui appartiennent à un groupe de modes propres avec la même fréquence de résonance, au moins trois de ces groupes avec des fréquences de résonance différentes existent dans le résonateur et à travers l'obstacle en combinant les premiers modes propres transversaux d'une fréquence de résonance de nouveaux modes propres soient créés, qui présentent à l'emplacement de l'obstacle une intensité minimale,

   **caractérisé en ce que** les miroirs (1-4, 7, 8) forment un résonateur annulaire dont l'axe optique se situe dans un plan et qui comporte deux miroirs courbes (1, 2) .

2. Résonateur à enrichissement optique selon la revendication 1, **caractérisé en ce que** les miroirs (1-4, 7, 8) sont agencés de telle sorte qu'une combinaison de modes a lieu du mode fondamental avec le premier mode propre transverse résonant suivant du résonateur, qui présente une symétrie par rapport à l'axe optique sans atteindre l'obstacle.

3. Résonateur à enrichissement optique selon la revendication 1, **caractérisé en ce que** l'ouverture traversante (6) est conçue comme une fente qui s'étend dans le plan de l'axe optique, dans lequel une dégénérescence des premiers modes propres transversaux est réglée dans une direction perpendiculaire au plan de l'axe optique.

4. Résonateur à enrichissement optique selon la revendication 1 ou 3,
**caractérisé en ce que** l'ouverture traversante (6) est formée dans un des miroirs incurvés (1).

5. Résonateur à enrichissement optique selon une des revendications 1 à 4,

**caractérisé en ce que** des masques de phase (9) sont appliqués à un premier (1) et un deuxième (7) des miroirs (1-4, 7, 8), dans lequel le deuxième miroir (7) avec masque de phase (9) se trouve à l'emplacement d'une image du premier miroir (1) avec masque de phase (9) .

6. Résonateur à enrichissement optique selon la revendication 4, **caractérisé en ce que** des masques de phase (9) sont appliqués à un premier (1) et un deuxième (7) des miroirs (1-4, 7, 8),

dans lequel le deuxième miroir (7) avec masque de phase (9) se trouve à l'emplacement d'une image du premier miroir (1) avec masque de phase (9),

le premier miroir (1) avec masque de phase (9) est le miroir incurvé avec une ouverture traversante en forme de fente (6),

une différence de numéro de mode d'une dégénérescence dans la direction transversale perpendiculaire au plan du trajet du faisceau s'élève à $\Delta n = 4$,

et une combinaison de modes des modes Gauss-Hermite $GH_{1,0}$ et $GH_{5,0}$ est excitée, qui présente quatre lobes de rayonnement à l'emplacement du miroir courbe avec ouverture traversante (6), dont chacun oscille en antiphase et est réglé sur la même phase à travers le masque de phase (9), de sorte qu'au niveau de la taille de faisceau entre les deux miroirs courbes (1, 2) l'intensité sur l'axe optique soit maximale.

7. Résonateur à enrichissement optique selon la revendication 5 ou 6, **caractérisé en ce que** le résonateur annulaire en plus des miroirs courbes (1, 2) et du deuxième miroir (7) avec masque de phase (9) comprend au moins trois autres miroirs (3, 4, 8).

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K.D. MOLL ; R.J. JONES ; J. YE.** Output coupling methods for cavity-based high-harmonic generation. *Opt. Expr.,* 2006, vol. 14
- **W.P. PUTNAM ; G. ABRAM ; E.L. FALCAO-FILHO ; J.R. BIRGE ; F.X. KÄRTNER.** High-intensity Bessel-Gauss beam enhancement cavities. *CLEO conference paper,* 2010
- **A. OZAWA ; A. VERNALEKEN ; W. SCHNEIDER ; I. GOTLIBOVYCH ; TH. UDEM ; T.W. HÄNSCH.** Non-collinear high harmonic generation: a promising outcoupling method for cavity-assisted XUV generation. *Opt. Expr.,* 2008, vol. 16, 6233-6239
- **Y.C. HUANG et al.** Nucl. Instruments and Methods in Phys. *Research,* 1995, vol. A358, 315
- **M. XIE et al.** *Proc SPIE,* 1993, vol. 1868, 150